(19) Europäisches Patentamt
European Patent Office
Office européen des brevets

(11) **EP 4 333 528 A1**

(12) **EUROPEAN PATENT APPLICATION**
published in accordance with Art. 153(4) EPC

(43) Date of publication:
**06.03.2024 Bulletin 2024/10**

(21) Application number: **22806489.5**

(22) Date of filing: **25.04.2022**

(51) International Patent Classification (IPC):
**H04W 72/04** (2023.01)

(52) Cooperative Patent Classification (CPC):
**H04W 72/04**

(86) International application number:
**PCT/CN2022/089065**

(87) International publication number:
**WO 2022/237520 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 CN 202110513712**

(71) Applicant: **Huawei Technologies Co., Ltd.
Shenzhen, Guangdong 518129 (CN)**

(72) Inventors:
• **HU, Mengshi
Shenzhen, Guangdong 518129 (CN)**
• **YU, Jian
Shenzhen, Guangdong 518129 (CN)**
• **GAN, Ming
Shenzhen, Guangdong 518129 (CN)**

(74) Representative: **Gill Jennings & Every LLP
The Broadgate Tower
20 Primrose Street
London EC2A 2ES (GB)**

(54) **RESOURCE ALLOCATION METHOD, COMMUNICATION APPARATUS, AND COMPUTER-READABLE STORAGE MEDIUM**

(57) This application provides a resource allocation method, a communication apparatus, and a computer-readable storage medium. An access point determines and sends a band indication and a resource unit allocation indication based on an RU/MRU allocated to a PPDU. The band indication indicates an index of a band of the RU/MRU, and an index range corresponding to the band indication in a first bandwidth is reused for an index range corresponding to the RU/MRU in a bandwidth of the PPDU. The resource unit allocation indication indicates an RU/MRU index of the RU/MRU on the band, and an index range corresponding to the resource unit allocation indication in the first bandwidth is also reused for an index range corresponding to the resource unit allocation indication in the bandwidth of the PPDU. The first bandwidth is greater than the bandwidth of the PPDU. It can be learned that, in this application, the first bandwidth greater than the bandwidth of the PPDU is used as a determining reference for allocating the indexes to the RU/MRU, thereby avoiding an index misconfiguration problem that occurs because a frequency domain location of the PPDU does not include a primary channel.

PPDU: physical layer protocol data unit
RU: resource unit
MRU: multi-resource unit

FIG. 11

EP 4 333 528 A1

**Description**

This application claims priority to Chinese Patent Application No. 202110513712.3, filed with the China National Intellectual Property Administration on May 11, 2021 and entitled "RESOURCE ALLOCATION METHOD, COMMUNICATION APPARATUS, AND COMPUTER-READABLE STORAGE MEDIUM", which is incorporated herein by reference in its entirety.

**TECHNICAL FIELD**

This application relates to the field of communication technologies, and in particular, to a resource allocation method, a communication apparatus, and a computer-readable storage medium.

**BACKGROUND**

In a conventional wireless local area network (Wireless Local Area Network, WLAN), each station (station) needs to contend for entire channel to perform data transmission, greatly reducing frequency utilization efficiency. To improve the situation, an OFDMA technology is currently used to divide a wireless channel into a plurality of sub-channels (subcarriers) in frequency domain. One or more subcarriers form each resource unit (resource unit, RU). Data of different users is carried on some resource units instead of occupying the entire channel. In this way, a plurality of users can perform parallel transmission in each time period without queuing and contention, thereby improving frequency utilization efficiency.

An access point (access point, AP) needs to notify, through a trigger frame, each station of an RU or a multi-resource unit (multi-resource unit, MRU) allocated to the station. In 802.11ax, a resource unit allocation subfield in the trigger frame has a total of eight bits, for example, B0-B7. B0 indicates a band (for example, high frequency 80 MHz or low frequency 80 MHz) that the RU/MRU is on in a 160 MHz bandwidth, and B7-B1 indicate an RU/MRU index of the RU/MRU on the band. When a bandwidth is less than or equal to 80 MHz, B0 is set to 0 by default, and B7-B1 indicate an index of the RU/MRU in the bandwidth. In 802.11be, B0 of a resource unit allocation subfield is combined with a primary-secondary 160 subfield to indicate an index of a band (for example, 80 MHz/160 MHz) that the RU/MRU is on in a 320 MHz bandwidth, and B7-B1 indicate an index of the RU/MRU on the band. When a bandwidth is less than or equal to 80 MHz, B0 and the primary-secondary 160 subfield are set to 0 by default, and B7-B1 indicate an index of the RU/MRU in the bandwidth. When a bandwidth is equal to 160 MHz, the primary-secondary 160 subfield is set to 0 by default, B0 indicates a band (namely, 80 MHz) that the RU/MRU is on in the 160 MHz bandwidth, and B7-B1 indicate an index of the RU/MRU on the band.

However, regardless of 802.11ax or 802.11be, the resource unit allocation subfield is designed based on a fact that a frequency domain location of a physical layer protocol data unit (physical layer protocol data unit, PPDU) includes a primary channel by default. As a result, an index misconfiguration problem occurs when the frequency domain location of the PPDU does not include the primary channel. Consequently, resource allocation cannot be correctly and effectively indicated.

**SUMMARY**

This application provides a resource allocation method, a communication apparatus, and a computer-readable storage medium, so that a correct RU/MRU index can be configured for a station regardless of whether a frequency domain location of a PPDU includes a primary channel.

According to a first aspect, this application provides a resource allocation method. The method is applied to a transmit end, and the method includes: The transmit end determines a band indication and a resource unit allocation indication based on an RU/MRU allocated to a physical layer protocol data unit PPDU, where the band indication indicates an index of a band of the RU/MRU, and an index range corresponding to the band indication in a first bandwidth is reused for an index range of the band indication; the resource unit allocation indication indicates an RU/MRU index of the RU or the MRU on the band, and an index range corresponding to the resource unit allocation indication in the first bandwidth is reused for an index range of the resource unit allocation indication; and the first bandwidth is greater than a bandwidth of the PPDU. Further, the transmit end sends the band indication and the resource unit allocation indication.

It can be learned that, in the method, the first bandwidth greater than the bandwidth of the PPDU is used as a determining input for completing the resource unit allocation indication. This helps avoid an index misconfiguration problem that occurs because a frequency domain location of the PPDU does not include a primary channel and the bandwidth of the PPDU is used as the determining input for the resource unit allocation indication.

In other words, because the first bandwidth is greater than the bandwidth of the PPDU and may include a frequency range of the PPDU that the frequency domain location of the PPDU does not include the primary channel, the index range corresponding to the band indication in the first bandwidth is reused as the index range of the band indication. This helps an access point select, based on an actual band of the RU/MRU, an index of the band indicated by the band indication. In addition, because the band can correspond to the frequency range in which the primary channel is not included, the index range corresponding to the resource unit allocation indication in the first bandwidth is also reused for the index range corresponding to the resource unit allocation indication. This helps avoid an index misconfiguration problem that occurs when an index can correspond to only an RU/MRU in a primary 20 MHz channel or a primary 40 MHz channel because RU/MRU indexes are reduced when the bandwidth of the PPDU is 20 MHz/40 MHz.

According to a second aspect, this application provides a resource allocation method. The method is applied to a receive end, and corresponds to the first aspect. The method includes: The receive end receives a band indication and a resource unit allocation indication, where the band indication indicates an index of a band of an RU/MRU, and an index range corresponding to the band indication in a first bandwidth is reused for an index range of the band indication; the resource unit allocation indication indicates an RU/MRU index of the RU/MRU on the band, an index range corresponding to the resource unit allocation indication in the first bandwidth is reused for an index range of the resource unit allocation indication; and the first bandwidth is greater than a bandwidth of a PPDU; and the receive end determines the band corresponding to the index indicated by the band indication, and determines the RU/MRU corresponding to the RU/MRU index indicated by the resource unit allocation indication on the band.

It can be learned that, in the method, the first bandwidth greater than the bandwidth of the PPDU is used as a determining input for the resource unit allocation indication. This helps avoid an RU/MRU misinterpretation problem caused because a frequency domain location of the PPDU does not include a primary channel and the bandwidth of the PPDU is used as the determining input for the resource unit allocation indication.

The following describes implementations applicable to the first aspect and the second aspect.

In this application, the band indication is formed by a primary-secondary 160 (PS 160) subfield and a bit B0 of a resource unit allocation subfield in a trigger frame; and the resource unit allocation indication is formed by bits B7-B1 of the resource unit allocation subfield.

When the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or

when the RU is a 2×996-tone RU, or the MRU is a 996+484-tone MRU or a 996+484+242-tone MRU, the PS160 subfield indicates which 160 MHz the RU/MRU is in; and/or

when the RU/MRU is greater than the 2×996-tone RU, the PS160 subfield and the resource unit allocation subfield together indicate the RU/MRU index.

In an embodiment, the first bandwidth is 320 MHz. An index range corresponding to the band indication in a 320 MHz bandwidth is reused for the index range of the band indication. In other words, the 320 MHz bandwidth is used as a reference for the index range of the band indication. To be pecific, in the resource unit allocation method, values of PS160, B0, X0, and X1 (where there are limitations, for example, for a bandwidth less than or equal to 80 MHz, PS160, B0, X0, and X1 are all set to 0; and for a 160 MHz bandwidth, PS160 and X1 are both set to 0) are no longer limited, but index ranges of PS160 and B0 in 320 MHz are reused for index ranges of PS160 and B0, and PS160 and B0 may indicate any 80 MHz/160 MHz in 320 MHz. The resource unit allocation indication indicates the RU/MRU index of the RU/MRU on the band, and an index range corresponding to the resource unit allocation indication in 320 MHz is reused for the index range of the resource unit allocation indication. In other words, the 320 MHz bandwidth is used as a reference for the index range of the resource unit allocation indication. To be specific, in the resource unit allocation method, an index range of B7-B1 when the bandwidth is 20 MHz/40 MHz is not limited, but an index range of B7-B1 in 320 MHz is reused for the index range of B7-B1, and B7-B1 may indicate any RU/MRU in 80 MHz/160 MHz. In this way, an index misconfiguration problem is resolved.

In another embodiment, the first bandwidth is 160 MHz. An index range corresponding to the band indication in a 160 MHz bandwidth is reused for index range of the band indication. In other words, the 160 MHz bandwidth is used as a reference for the index range of the band indication. To be specific, in the resource unit allocation method, values of PS160, B0, X0, and X1 (where there is a limitation, for example, for a bandwidth less than or equal to 80 MHz, PS160, B0, X0, and X1 are all set to 0) are no longer limited, but index ranges of PS160 and B0 in 160 MHz are reused for index ranges of PS160 and B0, and PS160 and B0 may indicate any 80 MHz in 160 MHz. The resource unit allocation indication indicates the RU/MRU index of the RU/MRU on the band, and an index range corresponding to the resource unit allocation indication in 160 MHz is reused for the index range of the resource unit allocation indication. In other words, the 160 MHz bandwidth is used as a reference for the index range of the resource unit allocation indication. To be specific, in the resource unit allocation method, an index range of B7-B1 when the bandwidth is 20 MHz/40 MHz is not limited, but an index range of B7-B1 in 160 MHz is reused for the index range of B7-B1, and B7-B1 may indicate any RU/MRU in 80 MHz/160 MHz. In this way, an index misconfiguration problem is resolved.

In an implementation, the PPDU is a PPDU in an aggregated physical layer protocol data unit A-PPDU.

In still another embodiment, the PPDU is a PPDU in an aggregated physical layer protocol data unit A-PPDU, the A-PPDU has a corresponding bandwidth indication, and the first bandwidth is a bandwidth of the A-PPDU. It can be learned that, the resource unit allocation method in this embodiment uses the bandwidth of the A-PPDU as a reference for unified allocation and indication, instead of indicating based on a bandwidth of a single PPDU in the A-PPDU. Because the bandwidth of the A-PPDU is greater than a bandwidth of a PPDU in the A-PPDU, an index misconfiguration problem that occurs because a frequency domain location of the PPDU does not include a primary channel is avoided.

In this application, when the bandwidth of the PPDU is 20 MHz and the resource unit is a 242-tone RU, the 242-tone RU is a non-OFDMA 242-tone RU. It can be learned that, a 242-tone RU in a 40 MHz, 80 MHz, 160 MHz, or 320 MHz bandwidth is an OFDMA 242-tone RU, and the 242-tone RU in the 20 MHz bandwidth is the non-OFDMA 242-tone RU. Therefore, the implementation helps ensure that the 242-tone RU in the 20 MHz bandwidth is the non-OFDMA 242-tone RU even if an index range of a larger bandwidth is reused.

In this application, when the bandwidth of the PPDU is 80 HMz, 160 MHz, or 320 MHz, each 20 MHz supports various 52+26-tone MRUs and various 106+26-tone MRUs. When the bandwidth of the PPDU is 20 MHz/40 MHz, each 20 MHz supports various 52+26-tone MRUs and various 106+26-tone MRUs. However, when the bandwidth of the PPDU is 80 MHz, some 52+26-tone MRUs in each 40 MHz are not defined or not supported, and some 106+26-tone MRUs in each 40 MHz are not defined or not supported. Therefore, in this application, to reuse the corresponding index range in the first bandwidth and avoid an index misconfiguration, triggering and sending of such MRUs that are not defined or not supported may be supported in the PPDU again. In this way, even if the first bandwidth is used as a determining input for determining the RU/MRU when the bandwidth of the PPDU is 20 MHz/40 MHz, any 52+26-tone MRU or any 106+26-tone MRU can be allocated.

According to a third aspect, this application provides another resource allocation method. The method is applied to a transmit end, and the method includes: The transmit end determines a band indication and a resource unit allocation indicator based on a resource unit RU/multi-resource unit MRU allocated to a physical layer protocol data unit PPDU, where the band indication indicates an index of a band of the RU/MRU, and an index range corresponding to the band indication in a 320 MHz bandwidth is reused for an index range of the band indication; and the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication; and the transmit end sends the band indication and the resource unit allocation indication.

According to a fourth aspect, this application further provides a resource allocation method. Corresponding to the third aspect, the method is applied to a receive end, and the method includes: The receive end receives a band indication and a resource unit allocation indication, where the band indication indicates an index of a band of an RU/MRU, and an index range corresponding to the band indication in a 320 MHz bandwidth is reused for an index range corresponding to the band indication in a bandwidth of a PPDU; and the resource unit allocation indication indicates an RU/MRU index corresponding to the RU/MRU on the band, and when the bandwidth of the PPDU is less than or equal to 80 MHz, an index range corresponding to the resource unit allocation indication in an 80 MHz bandwidth is reused for an index range of the resource unit allocation indication; and the receive end determines the band corresponding to the index indicated by the band indication, and determines the RU/MRU corresponding to the RU/MRU index indicated by the resource unit allocation indication on the band.

It can be learned that, in the method, the 320 MHz bandwidth is used as a determining reference for determining the index of the band. Therefore, the band can correspond to a frequency range in which a primary channel is not included. To be specific, values of PS160, B0, X0, and X1 (where there are limitations, for example, for a bandwidth less than or equal to 80 MHz, PS 160, B0, X0, and X1 are all set to 0; and for a 160 MHz bandwidth, PS160 and X1 are both set to 0) are no longer limited, but the 320 MHz bandwidth is used as a reference for index ranges of PS160 and B0, and PS160 and B0 may indicate any 80 MHz/160 MHz in 320 MHz. In addition, when the bandwidth of the PPDU is less than or equal to 80 MHz, the index range corresponding to the resource unit allocation indication in the 80 MHz bandwidth is reused for the index range of the resource unit allocation indication, to avoid an RU/MRU index limitation problem that occurs because the bandwidth of the PPDU (namely, 20 MHz/40 MHz) is used as a determining input for resource allocation. Therefore, in the method 200, an index misconfiguration problem that occurs because a frequency domain location of the PPDU does not include the primary channel is avoided.

The following describes optional implementations applied to the third aspect and the fourth aspect.

In this application, the band indication is formed by a primary-secondary 160 (PS 160) subfield and a bit B0 of a resource unit allocation subfield in a trigger frame; and the resource unit allocation indication is formed by bits B7-B1 of the resource unit allocation subfield.

When the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or

when the RU is a 2×996-tone RU, or the MRU is a 996+484-tone MRU or a 996+484+242-tone MRU, the PS160 subfield indicates which 160 MHz the RU/MRU is in; and/or

when the RU/MRU is greater than the 2×996-tone RU, the PS160 subfield and the resource unit allocation subfield together indicate the RU/MRU index.

In this application, when the bandwidth of the PPDU is 20 MHz and the resource unit is a 242-tone RU, the 242-tone RU is a non-OFDMA 242-tone RU. For details, refer to related content in the foregoing aspects. Details are not described herein again.

In this application, when the bandwidth of the PPDU is 80 HMz, 160 MHz, or 320 MHz, each 20 MHz supports various 52+26-tone MRUs and various 106+26-tone MRUs. For details, refer to related content in the foregoing aspects. Details are not described herein again.

In an implementation, logical-to-physical conversion of PS160 and B0 may be implemented by using mapping relationships shown in Table 1; and mapping relationships of PS160, B0, and B7-B1 may be implemented by using the following Table 2. To be specific, when the bandwidth is less than or equal to 80 MHz, 80 MHz is used as a determining input for interpreting PS160, B0, and B7-B1, or a determining input for completing the resource unit allocation indication.

**Table 1. How to enable parameters to complete logical-to-physical conversion to obtain an RU/MRU in 320 MHz**

| Bandwidth (MHz) | Logical input | | | Physical output (Physical output) | | |
|---|---|---|---|---|---|---|
| | Band configuration | PS160 | B0 | X0 | X1 | N |
| 80/160/320 MHz | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

**Table 2. Mapping relationships of PS160, B0, and B7-B1**

| PS160 subfield (PS160 subfield) | B0 of the resource unit allocation subfield (B0 of the RU Allocation subfield) | B7-B1 of the resource unit allocation subfield (B7-B 1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-3: (indicate 80 MHz that an RU is in) | | 0-36 | 80, 160, or (or) 320 | 26 | RU1 to RU37, respectively (respectively) | 37×N+RU index |
| | | 37-52 | 80, 160, or 320 | 52 | RU1 to RU16, respectively | 16×N+RU index |
| | | 53-60 | 80, 160, or 320 | 106 | RU1 to RU8, respectively | 8×N+RU index |
| | | 61-64 | 80, 160, or 320 | 242 | RU1 to RU4, respectively | 4×N+RU index |
| | | 65-66 | 80, 160, or 320 | 484 | RU1 and RU2 | 2×N+RU index |
| | | 67 | 80, 160, or 320 | 996 | RU1 | N+RU index |
| 0-1: (indicate 160 MHz that an RU is in) | 0 | 68 | Reserved | | | Reserved |
| | 1 | | 160 or 320 | 2×996 | RU1 | X1+RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: indicate 80 MHz that an MRU is in | | 70-81 | 80, 160, or 320 | 52+26 | MRU1 to MRU12, respectively | 12×N+MRU index |
| | | 82-89 | 80, 160, or 320 | 106+26 | MRU1 to MRU8, respectively | 8×N+MRU index |
| | | 90-93 | 80, 160, or 320 | 484+242 | MRU1 to MRU4, respectively | 4×N+MRU index |

(continued)

| PS160 subfield (PS 160 subfield) | B0 of the resource unit allocation subfield (B0 of the RU Allocation subfield) | B7-B1 of the resource unit allocation subfield (B7-B 1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-1: indicate 160 MHz that an MRU is in | 0 | 94 and 95 | 160 or 320 | 996+484 | MRU1 and MRU2, respectively | 4×X1+MRU index |
| | 1 | | | | MRU3 and MRU4, respectively | |
| 0-1: indicate 160 MHz that an MRU is in | 0 | 96-99 | 160 or 320 | 996+484+2 42 | MRU1 to MRU4, respectively | 8×X1+MRU index |
| | 1 | | | | MRU5 to MRU8, respectively | |
| 0 | 0 | 100-103 | 320 | 2×996+484 | MRU1 to MRU4, respectively | MRU index |
| 0 | 1 | | | | MRU5 and MRU6, respectively | |
| 1 | 0 | | | | MRU7 and MRU8, respectively | |
| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |

(continued)

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0 | 0 | 105 and 106 | 320 | $3\times996+484$ | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any (Any) | Reserved (Reserved) | Reserved | Reserved |

In another implementation, the logical-to-physical conversion of PS160 and B0 may be implemented by using Table 3, to eliminate limitations on values of PS160, B0, X0, and X1 when the bandwidth is 20 MHz, 40 MHz, 80 MHz, or 160 MHz; and mapping relationships of PS160, B0, and B7-B1 may be implemented by using the following Table 4, to use 20 MHz, 40 MHz, 80 MHz, 160 MHz, or 320 MHz as an input. However, when the bandwidth is less than 80 MHz, an index range of 80 MHz is allowed to be actually used for B7-B1. In this way, when the bandwidth is less than 80 MHz, the index range of 80 MHz, instead of an index range of a 20 MHz/40 MHz bandwidth, is allowed to be actually used for B7-B1. In this way, a misconfiguration problem that occurs because an index cannot be covered is avoided.

**Table 3. How to enable parameters to complete logical-to-physical conversion to obtain an RU/MRU in 320 MHz**

| Bandwidth (MHz) | Logical input | | | Physical output (Physical output) | | |
|---|---|---|---|---|---|---|
| | Band configuration | PS160 | B0 | X0 | X1 | N |
| 20/40/80/160/320 MHz | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

**Table 4. Mapping relationships of PS160, B0, and B7-B1**

| PS160 subfield (PS160 subfield) | B0 of the resource unit allocation subfield (B0 of the RU Allocation subfield) | B7-B1 of the resource unit allocation subfield (B7-B 1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-3: (indicate 80 MHz that an RU is in) | | 0-36 | 20, 40, 80, 160, or 320 | 26 | RU1 to RU37, respectively | $37 \times N + RU$ index |
| | | 37-52 | 20, 40, 80, 160, or 320 | 52 | RU1 to RU16, respectively | $16 \times N + RU$ index |
| | | 53-60 | 20, 40, 80, 160, or 320 | 106 | RU1 to RU8, respectively | $8 \times N + RU$ index |
| | | 61-64 | 20, 40, 80, 160, or 320 | 242 | RU1 to RU4, respectively | $4 \times N + RU$ index |
| | | 65-66 | 40, 80, 160, or 320 | 484 | RU1 and RU2 | $2 \times N + RU$ index |
| | | 67 | 80, 160, or 320 | 996 | RU1 | N+RU index |

(continued)

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-1: (indicate 160 MHz that an RU is in) | 0 | 68 | Reserved | | | Reserved |
| | 1 | | 160 or 320 | 2×996 | RU1 | X1+RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: indicate 80 MHz that an MRU is in | | 70-81 | 20, 40, 80, 160, or 320 | 52+26 | MRU1 to MRU12, respectively | 12×N+M RU index |
| | | 82-89 | 20, 40, 80, 160, or 320 | 106+26 | MRU1 to MRU8, respectively | 8×N+MR U index |
| | | 90-93 | 20, 40, 80, 160, or 320 | 484+242 | MRU1 to MRU4, respectively | 4×N+MR U index |
| 0-1: indicate 160 MHz that an MRU is in | 0 | 94 and 95 | 160 or 320 | 996+484 | MRU1 and MRU2, respectively | 4×X1+M RU index |
| | 1 | | | | MRU3 and MRU4, respectively | |
| 0-1: indicate 160 MHz that an MRU is in | 0 | 96-99 | 160 or 320 | 996+484+ 242 | MRU1 to MRU4, respectively | 8×X1+M RU index |
| | 1 | | | | MRU5 to MRU8, respectively | |
| 0 | 0 | 100-103 | 320 | 2×996+484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |

(continued)

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105 and 106 | 320 | 3×996+484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

Optionally, the bandwidth shown in Table 1 to Table 4 may not include 320 MHz. For example, if the 320 MHz bandwidth is used as a determining input for Table 1 to Table 4, the bandwidth shown in Table 1 to Table 4 includes 320 MHz. If a bandwidth of a PPDU in an A-PPDU is used as the determining input for Table 1 to Table 4, because a bandwidth of the A-PPDU is greater than a bandwidth of each PPDU, the bandwidth shown in Table 1 to Table 4 may not include 320 MHz, and correspondingly, an RU/MRU greater than 160 MHz may not be solved in Table 2 and Table 4.

According to a fifth aspect, this application provides still another resource allocation method. In the method, a transmit end determines a band indication and a resource unit allocation indication of each PPDU based on an RU/MRU allocated to each PPDU in an A-PPDU, where the band indication indicates an index of a band of the RU/MRU; the resource unit allocation indication indicates an RU/MRU index of the RU/MRU on the band; an index range of the band indication of each PPDU is an index range of the band indication in a bandwidth of the PPDU; and an index range of the resource unit allocation indication of each PPDU is an index range of the resource unit allocation indication in the bandwidth of the PPDU; and the transmit end sends each band range indication and each resource unit allocation indication. It can be learned that, in the method, each PPDU has a corresponding set of the band indication and the resource unit allocation indication, to help remove a binding relationship between the bandwidth of the PPDU and a primary channel, so that an index misconfiguration problem that occurs because a frequency domain location of the PPDU does not include the primary channel is avoided.

According to a sixth aspect, this application provides still another resource allocation method. The method is applied to a receive end and corresponds to the fifth aspect. The method includes: A receive end receives a band indication and a resource unit allocation indication of each PPDU in an aggregated physical layer protocol data unit A-PPDU, where the band indication indicates an index of a band of an RU/MRU; the resource unit allocation indication indicates an RU/MRU index of the RU/MRU on the band; an index range of the band indication of each PPDU is an index range of the band indication in a bandwidth of the PPDU; and an index range of the resource unit allocation indication of each PPDU is an index range of the resource unit allocation indication in the bandwidth of the PPDU; and for each PPDU, the receive end determines the band corresponding to the index indicated by the corresponding band indication, and determines the RU/MRU corresponding to the RU/MRU index indicated by the corresponding resource unit allocation indication on the band.

It can be learned that, in the resource unit allocation method, an RU/MRU index misconfiguration problem may be resolved by using a completely independent parameter configuration as a determining input for the resource unit allocation indication.

According to a seventh aspect, this application further provides a communication apparatus. The communication apparatus has some or all functions of the transmit end for implementing the method examples in the first aspect, the third aspect, or the fifth aspect. For example, functions of the communication apparatus may have functions in some or all of embodiments of this application, or may have a function of independently implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to be coupled to the processing unit and a sending unit, and the storage unit stores program instructions and data that are necessary for the communication apparatus.

In an implementation, the communication apparatus includes:

a processing unit, configured to determine a band indication and a resource unit allocation indication based on a resource unit RU/multi-resource unit MRU allocated to a physical layer protocol data unit PPDU, where
the band indication indicates an index of a band of the RU/MRU, and an index range corresponding to the band indication in a first bandwidth is reused for an index range of the band indication;
the resource unit allocation indication indicates an RU/MRU index of the RU/MRU on the band, and an index range corresponding to the resource unit allocation indication in the first bandwidth is reused for an index range of the resource unit allocation indication; and
the first bandwidth is greater than a bandwidth of the PPDU; and
a communication unit, configured to send the band indication and the resource unit allocation indication.

In another implementation, the communication apparatus includes:

a processing unit, configured to determine a band indication and a resource unit allocation indication based on a resource unit RU/multi-resource unit MRU allocated to a physical layer protocol data unit PPDU, where
the band indication indicates an index of a band of the RU/MRU, and an index range corresponding to the band indication in a 320 MHz bandwidth is reused for an index range of the band indication; and
the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication; and
a communication unit, configured to send the band indication and the resource unit allocation indication.

In still another implementation, the communication apparatus includes:

a processing unit, configured to determine a band indication and a resource unit allocation indication of each PPDU based on a resource unit RU/multi-resource unit MRU allocated to each PPDU in an aggregated physical layer protocol data unit A-PPDU, where
the band indication indicates an index of a band of the RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
a communication unit, configured to send each band range indication and each resource unit allocation indication.

In an example, the processing unit may be a processor, the communication unit may be a transceiver or a communication interface, and the storage unit may be a memory.

According to an eighth aspect, this application further provides a communication apparatus. The communication apparatus has some or all functions of the receive end for implementing the method examples in the second aspect, the fourth aspect, or the sixth aspect. For example, functions of the communication apparatus may have functions of the receive end in some or all of embodiments of this application, or may have a function of independently implementing any embodiment of this application. The function may be implemented by hardware, or may be implemented by hardware executing corresponding software. The hardware or the software includes one or more units or modules corresponding to the functions.

In a possible design, a structure of the communication apparatus may include a processing unit and a communication unit. The communication unit is configured to support the communication apparatus in performing a corresponding function in the foregoing method. The communication unit is configured to support communication between the communication apparatus and another device, for example, a station. The communication apparatus may further include a storage unit. The storage unit is configured to be coupled to an obtaining unit and a sending unit, and the storage unit stores program instructions and data that are necessary for the communication apparatus.

In an implementation, the communication apparatus includes:

a communication unit, configured to receive a band indication and a resource unit allocation indication, where the band indication indicates an index of a band of an RU/MRU, and an index range corresponding to the band indication in a first bandwidth is reused for an index range of the band indication; and
the resource unit allocation indication indicates an RU/MRU index of the RU/MRU on the band, and an index range corresponding to the resource unit allocation indication in the first bandwidth is reused for an index range of the resource unit allocation indication; and
a processing unit, configured to determine the band corresponding to the index indicated by the band indication, and determine the RU/MRU corresponding to the RU/MRU index indicated by the resource unit allocation indication on the band.

In another implementation, the communication apparatus includes:

a communication unit, configured to receive a band indication and a resource unit allocation indication, where the band indication indicates an index of a band of an RU/MRU, and an index range corresponding to the band indication in a 320 MHz bandwidth is reused for an index range corresponding to the band indication in a bandwidth of a PPDU; and
the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication; and
a processing unit, configured to determine the band corresponding to the index indicated by the band indication, and determine the RU/MRU corresponding to the RU/MRU index indicated by the resource unit allocation indication on the band.

In still another implementation, the communication apparatus includes:

a communication unit, configured to receive a band indication and a resource unit allocation indication of each PPDU in an aggregated physical layer protocol data unit A-PPDU, where
the band indication indicates an index of a band of an RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
a processing unit, configured to: for each PPDU, determine the band corresponding to the index indicated by the corresponding band indication, and determine the RU/MRU corresponding to the RU/MRU index indicated by the corresponding resource unit allocation indication on the band.

In a specific implementation process, the processor may be configured to perform, for example, but not limited to, baseband related processing, and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to a geometric processor and a multimedia processor). The chip may be referred to as a system on chip (system on chip). Whether components are independently disposed on different chips or are integrated and disposed on one or more chips usually depends on specific requirements of a product design. Specific implementation forms of the foregoing components are not limited in this embodiment of the present invention.

According to a ninth aspect, this application further provides a processor, configured to perform the method in any one of the first aspect to the sixth aspect. In a process of performing the methods, processes of sending the foregoing information and receiving the foregoing information in the foregoing methods may be understood as a process of outputting the foregoing information by the processor and a process of receiving the foregoing input information by the processor. Specifically, when outputting the foregoing information, the processor outputs the information to a transceiver, so that the transceiver transmits the information. Further, after the foregoing information is output by the processor, other processing may further need to be performed on the information before the information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the information is input into the processor.

In this way, unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In a specific implementation process, the processor may be a processor specially configured to perform the methods, or may be a processor, for example, a general purpose processor, that executes computer instructions in a memory to perform the methods. The memory may be a non-transitory (non-transitory) memory such as a read-only memory (read only memory, ROM). The memory and the processor may be integrated on a same chip, or may be separately disposed on different chips. A type of the memory and a manner of disposing the memory and the processor are not limited in embodiments of the present invention.

According to a tenth aspect, an embodiment of the present invention provides a computer-readable storage medium, configured to store computer software instructions used by the foregoing station, where the computer software instructions include a program used to perform the foregoing method in the first aspect, the third aspect, or the fifth aspect.

According to an eleventh aspect, an embodiment of the present invention provides a computer-readable storage medium, configured to store computer software instructions used by the foregoing access point, where the computer software instructions include a program used to perform the foregoing method in the second aspect, the fourth aspect, or the sixth aspect.

According to a twelfth aspect, this application further provides a computer program product including instructions. When the computer program product is run on a computer, the computer is enabled to perform the method in the first aspect, the third aspect, or the fifth aspect.

According to a thirteenth aspect, this application further provides a computer program product including instructions. When the computer program product is run on a computer, the computer is enabled to perform the method in the second aspect, the fourth aspect, or the sixth aspect.

According to a fourteenth aspect, this application provides a chip system. The chip system includes a processor and an interface, configured to support a transmit end in implementing a function in the first aspect, the third aspect, or the fifth aspect, for example, determining or processing at least one of data and information in the foregoing method. In a possible design, the chip system further includes a memory. The memory is configured to store program instructions and data that are required by a station. The chip system may include a chip, or may include a chip and another discrete component.

According to a fifteenth aspect, this application provides a chip system. The chip system includes a processor and an interface, configured to support a receive end in implementing a function in the second aspect, the fourth aspect, or the sixth aspect, for example, determining or processing at least one of data and information in the foregoing method. In a possible design, the chip system further includes a memory. The memory is configured to store program instructions and data that are required by an access point. The chip system may include a chip, or may include a chip and another discrete component.

## BRIEF DESCRIPTION OF DRAWINGS

FIG. 1 is a schematic diagram of a network structure according to an embodiment of this application;
FIG. 2 is a schematic diagram of a channel distribution according to an embodiment of this application;
FIG. 3 is a schematic diagram of another channel distribution according to an embodiment of this application;
FIG. 4 is a schematic diagram of still another channel distribution according to an embodiment of this application;
FIG. 5 is a schematic diagram of still another channel distribution according to an embodiment of this application;
FIG. 6 is a schematic diagram of a distribution of resource units in each 80 MHz according to an embodiment of this application;

FIG. 7 is a schematic diagram of a distribution of resource units in 320 MHz according to an embodiment of this application;

FIG. 8 is a schematic diagram of a common information field and a user information field in 802.11ax according to an embodiment of this application;

FIG. 9a is a schematic diagram of a common information field in 802.11be according to an embodiment of this application;

FIG. 9b is a schematic diagram of a user information field in 802.11be according to an embodiment of this application;

FIG. 10 is a schematic diagram of an A-PPDU according to an embodiment of this application;

FIG. 11 is a schematic flowchart of a resource allocation method 100 according to an embodiment of this application;

FIG. 12 is a schematic flowchart of a resource allocation method 400 according to an embodiment of this application;

FIG. 13 is a schematic diagram of a communication apparatus 1300 according to an embodiment of this application; and

FIG. 14 is a schematic diagram of a communication apparatus 1400 according to an embodiment of this application.

## DESCRIPTION OF EMBODIMENTS

This application provides a resource allocation method and a related apparatus, so that a correct RU/MRU index can be configured for a station when a frequency domain location of a PPDU does not include a primary channel.

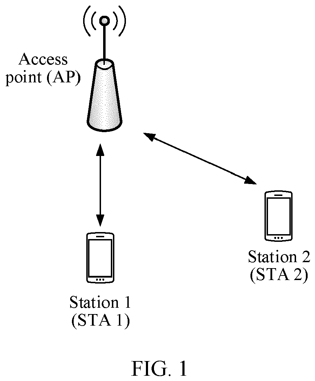

First, FIG. 1 is used as an example to describe a network structure to which the resource allocation method in this application is applicable. FIG. 1 is a schematic diagram of a network structure according to an embodiment of this application. As shown in FIG. 1, the network structure may include an access point (access point, AP) and a plurality of non-access point stations (non-access point station, non-AP STA). For ease of description, the non-access point station is referred to as a station for short in the following. FIG. 1 is described by using an example in which the network structure includes one access point (AP) and two stations (a STA 1 and a STA 2). Optionally, the network structure may further include more access points and/or more stations, for example, a structure for communication between APs, or a structure for communication between STAs.

The access point may be an access point used by a terminal device (such as a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (for example, a mobile phone) or a network device (for example, a router) with a wireless fidelity (wireless fidelity, Wi-Fi) chip. The access point may be a device that supports an 802. 11be standard. Alternatively, the access point may be a device that supports a plurality of wireless local area network (wireless local area network, WLAN) standards of the 802.11 family such as the 802.11be standard, an 802.11ax standard, an 802.11ac standard, an 802.11n standard, an 802.11g standard, an 802.11b standard, and an 802.11a standard.

The station may be a wireless communication chip, a wireless sensor, a wireless communication terminal, or the like, and may also be referred to as a user. For example, the station may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. Optionally, the station may support an 802.1 The standard. The station may also support a plurality of wireless local area network (wireless local area network, WLAN) standards of the 802.11 family such as the 802.11be standard, an 802.11ax standard, an 802.11ac standard, an 802.11n standard, an 802.11g standard, an 802.11b standard, and an 802.11a standard.

For example, the access point and the station may be devices used in the Internet of Vehicles, Internet of Things nodes, sensors, or the like in the Internet of Things (Internet of Things, IoT), smart cameras, smart remote controls, smart water or electricity meters, or the like in smart home, sensors in smart city.

Then, to facilitate understanding of related content in embodiments of this application, the following describes some concepts in embodiments of this application.

1. Channel distribution

An entire wireless channel may be divided into a plurality of sub-channels or subcarriers. A 320 MHz bandwidth is used as an example. The entire wireless channel may be divided into a primary 20 MHz channel (or a primary channel, Primary 20 MHz, P20 for short), a secondary 20 MHz channel (Secondary 20 MHz, S20), a secondary 40 MHz channel (Secondary 40 MHz, S40), a secondary 80 MHz channel (Secondary 80 MHz, S80), and a secondary 160 MHz channel (Secondary 160 MHz, S160). P40 is formed by P20 and S20, P80 is formed by P20, S20, and S40, and P160 is formed by P20, S20, S40, and S80.

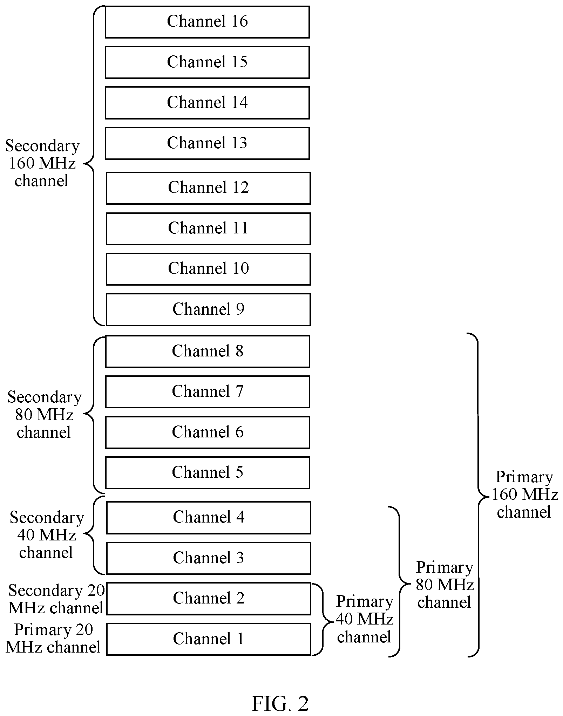

Channel distributions shown in FIG. 2 to FIG. 5 are used as examples. In the channel distributions shown in FIG. 2 to FIG. 5, an example in which a primary 20 MHz channel is at a lowest frequency in 80 MHz is used, and an example in which channels are numbered sequentially from a channel 1 to a channel 16 in ascending order of frequencies is used. FIG. 2 shows channel distribution when a primary 20 MHz channel is at a lowest frequency, namely, a frequency location of a channel 1, when a bandwidth is 320 MHz. Correspondingly, corresponding frequency locations of S20, S40, S80, and S160 may be determined based on the frequency location of the channel 1 that the primary 20 MHz channel is at. As shown in FIG. 2, S20 is at a frequency location of a channel 2, S40 is at frequency locations of a channel 3 and a channel 4, S80 is at frequency locations of a channel 5 to a channel 8, and S160 is at frequency locations of a channel 9 to a channel 16. Optionally, the channel distribution shown in FIG. 2 may be denoted as [P80 S80 S160].

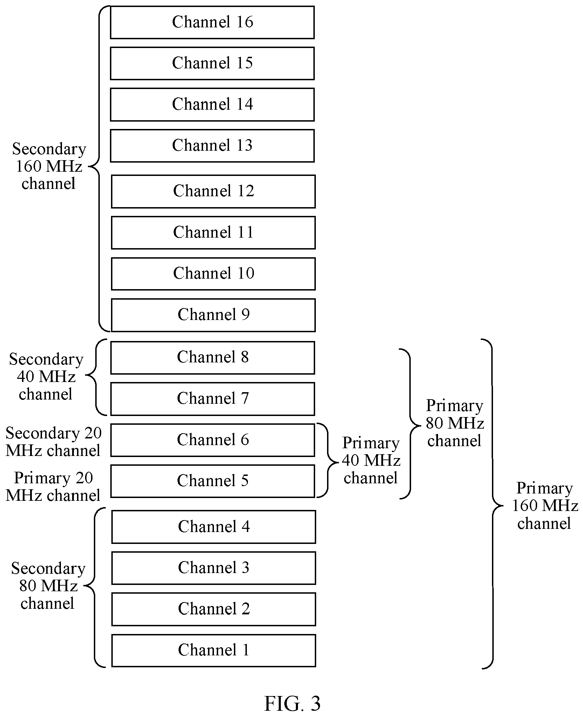

FIG. 3 also shows channel distribution when a primary 20 MHz channel is at a frequency location of a channel 5 when a bandwidth is 320 MHz. Correspondingly, corresponding frequency locations of S20, S40, S80, and S160 may be determined based on the frequency location of the channel 5 that the primary 20 MHz channel is at. As shown in FIG. 3, S20 is at a frequency location of a channel 6, S40 is at frequency locations of a channel 7 and a channel 8, S80 is at frequency locations of a channel 1 to a channel 4, and S160 is still at frequency locations of a channel 9 to a channel 16. Optionally, the channel distribution shown in FIG. 3 may be denoted as [S80 P80 S160].

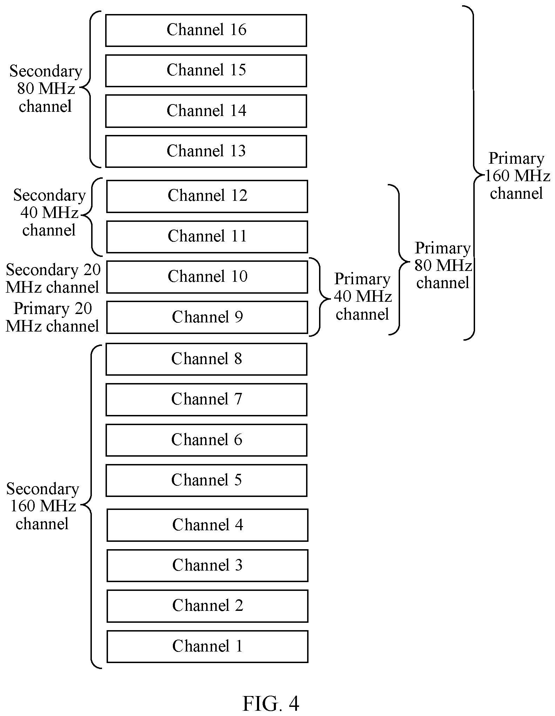

FIG. 4 also shows channel distribution when a primary 20 MHz channel is at a frequency location of a channel 9 when a bandwidth is 320 MHz. Correspondingly, corresponding frequency locations of S20, S40, S80, and S160 may be determined based on the frequency location of the channel 9 that the primary 20 MHz channel is at. As shown in FIG. 4, S20 is at a frequency location of a channel 10, S40 is at frequency locations of a channel 11 and a channel 12, S80 is at frequency locations of a channel 13 to a channel 16, and S160 is at frequency locations of a channel 1 to a channel 8. Optionally, the channel distribution shown in FIG. 4 may be denoted as [S160 P80 S80].

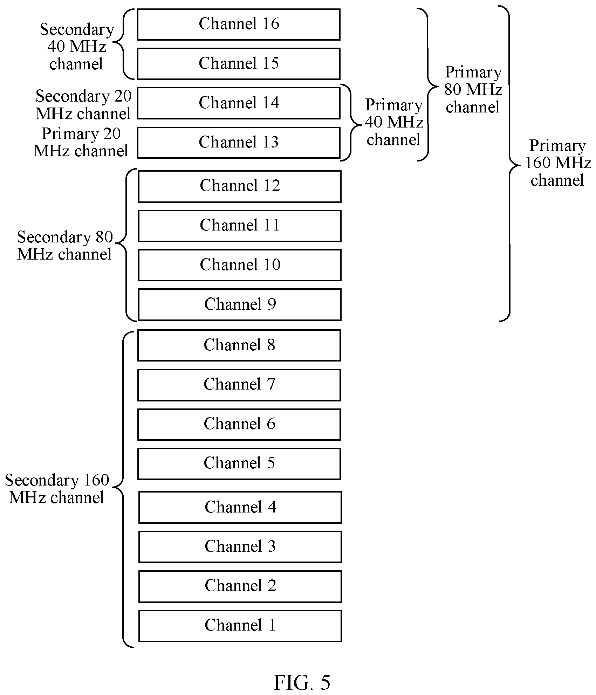

FIG. 5 also shows channel distribution when a primary 20 MHz channel is at a frequency location of a channel 13 when a bandwidth is 320 MHz. Correspondingly, corresponding frequency locations of S20, S40, S80, and S160 may be determined based on the frequency location of the channel 13 that the primary 20 MHz channel is at. As shown in FIG. 5, S20 is at a frequency location of a channel 14, S40 is at frequency locations of a channel 15 and a channel 16, S80 is at frequency locations of a channel 9 to a channel 12, and S160 is at frequency locations of a channel 1 to a channel 8. Optionally, the channel distribution shown in FIG. 5 may be denoted as [S160 S80 P80].

Optionally, the channel distributions shown in FIG. 2 to FIG. 5 may be notified to a station by using a band configuration, or a station determines a specific band configuration based on a frequency at which the station is docked.

2. Resource unit

Different numbers of subcarriers on a channel may be combined into resource units (resource units, RUs) of different sizes, for example, a 26-tone RU including 26 subcarriers, a 52-tone RU including 52 subcarriers, a 106-tone RU including 106 subcarriers, a 484-tone RU including 484 subcarriers, a 996-tone RU including 996 subcarriers, and a 2×996-tone RU including 2*996 subcarriers.

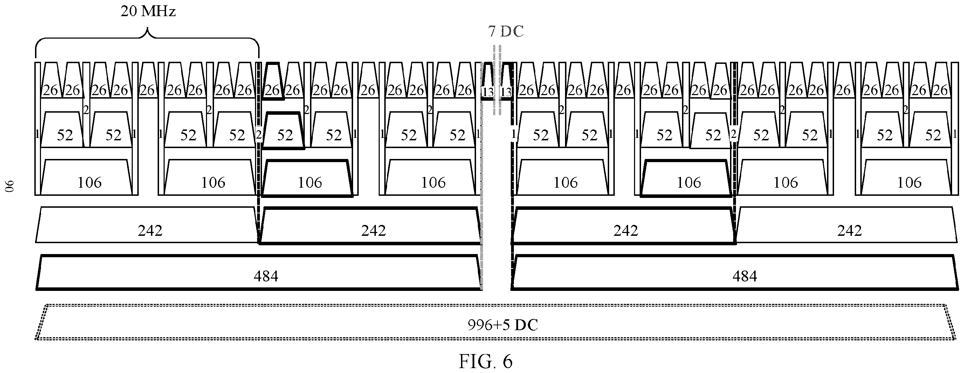

Refer to FIG. 6. FIG. 6 is a schematic diagram of a distribution of resource units in each 80 MHz according to an embodiment of this application. As shown in FIG. 6, a first row indicates that each 80 MHz may include 37 26-tone RUs, a second row indicates that each 80 MHz may include 16 52-tone RUs, a third row indicates that each 80 MHz may include eight 106-tone RUs, a fourth row indicates that each 80 MHz may include four 242-tone RUs, a fifth row indicates that each 80 MHz may include two 484-tone RUs, and a sixth row indicates that each 80 MHz may include one 996-tone RU. As shown in FIG. 6, each 20 MHz may at most include nine 26-tone RUs, or four 52-tone RUs, or two 106-tone RUs, or one 242-tone RU. Certainly, an RU in each 20 MHz may be a combination of the RUs of different sizes. Correspondingly, 160 MHz may include two 996-tone RUs or one 2×996-tone RU.

Resource units shown in each row in FIG. 6 do not completely occupy an entire bandwidth, and each row may include some remaining subcarriers for isolation between resource units. As shown in FIG. 6, each 20 MHz channel has an interval of two subcarriers and an interval of one subcarrier, and there is an interval of 26 subcarriers between a 484-tone RU and a 484-tone RU.

Optionally, an access point may allocate a multi-resource unit to a station, that is, the multi-resource unit is combined or combined as a resource configured for the station, thereby improving transmission efficiency. A possible combination solution of the multi-resource unit (multi-resource unit, MRU) may be: a 52+26-tone MRU, a 106+26-tone MRU, a 484+242-tone MRU, a 996+484-tone MRU, a 996+484+242-tone MRU, a 2×996+484-tone MRU, a 3×996+484-tone MRU, or the like.

For example, first 20 MHz shown in FIG. 6 is used as an example. A 52+26-tone MRU in each 20 MHz may be: a combination of a second 52-tone RU in the second row and a second 26-tone RU in the first row, namely, a 52-tone RU2+a 26-tone RU2; a combination of the second 52-tone RU in the second row and a fifth 26-tone RU in the first row, namely, the 52-tone RU2+a 26-tone RU5; or a combination of a third 52-tone RU in the second row and an eighth 26-tone RU in the first row, namely, a 52-tone RU3+a 26-tone RU8.

For example, first 20 MHz shown in FIG. 6 is used as an example. A 106+26 MRU in each 20 MHz may be: a combination of a first 106-tone RU in the third row and a fifth 26-tone RU in the first row, namely, a 106-tone RU1+a 26-tone RU5; or a combination of a second 106-tone RU in the third row and a fifth 26-tone RU in the first row, namely, a 106-tone RU2+a 26-tone RU5.

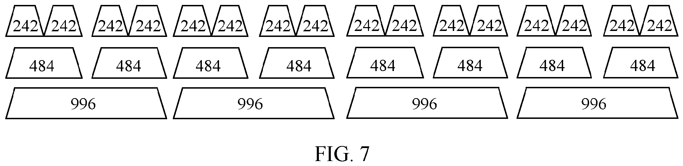

For another example, first 80 MHz shown in FIG. 7 is used as an example. A 484+242-tone MRU in each 80 MHz may be: a first 242-tone RU in a fourth row and a second 484-tone RU in a fifth row, namely, a 484-tone RU2+a 242-tone RU1; a second 242-tone RU in the fourth row and the second 484-tone RU in the fifth row, namely, the 484-tone RU2+a 242-tone RU2; a first 484-tone RU in the fifth row and a third 242-tone RU in the fourth row, namely, a 484-tone RU1+a 242-tone RU3; or the first 484-tone RU in the fifth row and a fourth 242-tone RU in the fourth row, namely, the 484-tone RU1+a 242-tone RU4.

For specific combination examples corresponding to the 996+484-tone MRU, the 996+484+242-tone MRU, the 2×996+484-tone MRU, the 3×996+484-tone MRU, or the like, details are not described herein.

3. Trigger frame

The trigger frame may trigger one or more trigger-based physical layer protocol data units (trigger-based physical layer protocol data units, TB PPDUs) and allocate resources to the TB PPDUs. The trigger frame may also carry other information required by a station that is configured to send the TB PPDUs in response to the trigger frame. A TB PPDU in 802.11ax may be a high efficient trigger frame-based physical layer protocol data unit (high efficient trigger-based physical layer protocol data unit, HE TB PPDU), and a TB PPDU in 802.1 The may be an extremely high throughput trigger frame-based physical layer protocol data unit (Extremely High Throughput trigger-based physical layer protocol data unit, EHT TB PPDU). Optionally, a TB PPDU in a future WLAN standard of the 802.11 family may be a trigger frame-based physical layer protocol data unit or the like in a future generation of Wi-Fi standard.

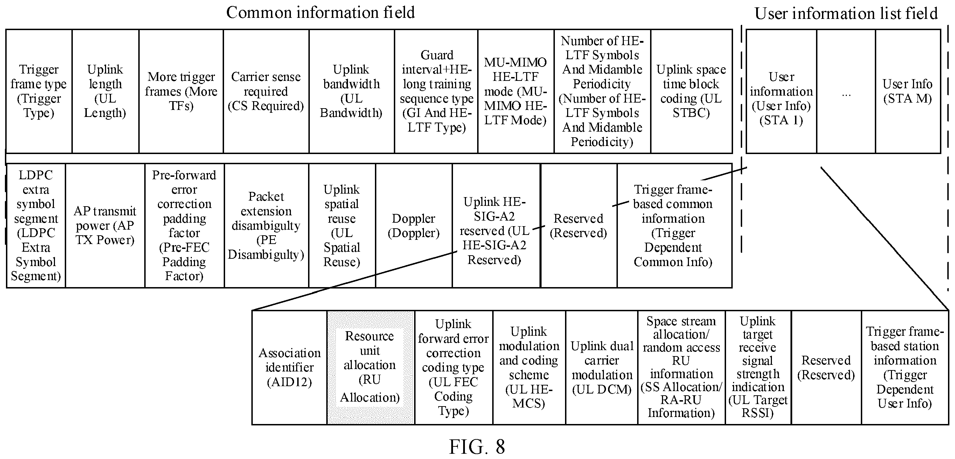

In 802.11ax, the trigger frame may include a common information (common info) field and a user information list (user info list) field. The trigger frame may further include a frame control (frame control) field, a duration (duration) field, a receive address (receive address, RA) field, a transmit address (transmit address, TA) field, a padding (padding) field, a frame check sequence (frame check sequence, FCS) field, and the like. As shown in FIG. 8, a common information field includes common information that all STAs need to read. For example, the common information field includes common information that all stations need to read, for example, a trigger frame type (trigger type) subfield, a length (length) subfield, a cascade indication (cascade indication) subfield, a carrier sense required (CS Required) subfield, a bandwidth (bandwidth) subfield, a guard interval+long training sequence (GI+LTF) subfield, and a trigger frame-based common information (trigger dependent common info) subfield. As shown in FIG. 8, a user information list field includes one or more user information fields. Each user information field includes information that each STA needs to read, for example, an association identifier (Association Identifier, AID) subfield, a resource unit allocation (RU allocation) subfield, a coding type (coding type) subfield, a modulation and coding scheme (Modulation and Coding Scheme, MCS) subfield, a reserved (reserved) subfield, and a trigger frame-based user information (trigger dependent user info) subfield. In the user information field, an association identifier (Association Identifier 12, AID12) indicates an association identifier of a STA, and a resource unit allocation (RU Allocation) subfield indicates a specific resource unit location allocated to the STA (the STA indicated by the AID 12).

In this way, after receiving a trigger frame, a STA may parse out user information field that matches an AID of the STA, and then send a TB PPDU on an RU indicated by a resource unit allocation subfield in the user information field.

A resource unit allocation indication of the EHT TB PPDU is similar to a resource unit allocation indication of the HE TB PPDU, so that a same trigger frame has a capability of simultaneously triggering the HE TB PPDU and the EHT TB PPDU, the trigger frame also has strong inheritance and a simple form, and there is no need to design two independent trigger frame structures. The following separately describes a resource unit indication manner of the HE TB PPDU and a resource unit indication manner of the EHT TB PPDU.

3.1 Resource unit allocation indication of an HE TB PPDU and a manner of interpreting corresponding fields

A resource unit of the HE TB PPDU is indicated by a resource unit allocation subfield (RU Allocation subfield) in a trigger frame. The resource unit allocation subfield in the trigger frame has a total of eight bits, for example, B0-B7. B0 indicates whether the allocated RU is in primary 80 MHz or secondary 80 MHz in a 160 MHz bandwidth. When a bandwidth is less than or equal to 80 MHz, B0 is set to 0 by default. Optionally, in this specification, an indication that indicates a location and a size of a band that the allocated RU is on is referred to as a band indication. In this specification, B7-B1 of the resource unit allocation subfield are referred to as a resource unit allocation indication.

In Table 5, allocation of all possible resource units is listed. The following describes columns: A first column is indexes indicated by B7-B1 of the resource unit allocation subfield; a second column is bandwidths of PPDUs indicated by an uplink bandwidth subfield (UL BW subfield); a third column is various possible resource unit sizes; and a fourth column is RU indexes (RU Indexes), where the RU indexes are relative indexes in one specific 80 MHz (except for a situation of 2×996), to be specific, RU indexes of various possible sizes in 80 MHz are described at a granularity of the 80 MHz. For example, even if the UL BW subfield is 160 MHz, an index range of a 242-tone RU is still 4. In this application, an index range of the resource unit allocation indication is index ranges that are in the first column and that correspond to bandwidths of various PPDUs shown in the second column and possible resource unit sizes shown in the third column. For example, assuming that an access point determines that a bandwidth of a PPDU is 20 MHz and a resource unit size is a 26-tone RU, it can be learned based on Table 5 that an index range of B7-B1 is 0-8. Correspondingly, each index in the indexes 0-8 indicates that the resource unit size is one of an RU1 to an RU9 of the 26-tone RU. For example, assuming that an access point determines that a bandwidth of a PPDU is 80 MHz and a resource unit size is a 26-tone RU, it can be learned based on Table 5 that an index range of B7-B1 is 0-36. Correspondingly, each index in the indexes 0-36 indicates that the resource unit size is one of an RU1 to an RU37 of the 26-tone RU. In Table 5, 80+80 MHz indicates a discontinuous 160 MHz bandwidth.

Table 5. Resource unit allocation information (B7-B1) in a trigger frame in 802.11ax

| B7-B1 of the resource unit allocation subfield (B7-B1 of the RU Allocation subfield) | Uplink bandwidth subfield (UL BW subfield) | Resource unit size (RU size) | Resource unit index (RU Index) |
|---|---|---|---|
| 0-8 | 20 MHz, 40 MHz, 80 MHz, 80+80 MHz, or 160 MHz | 26-tone RU | RU1 to RU9, respectively (RU1 to RU9, respectively) |
| 9-17 | 40 MHz, 80 MHz, 80+80 MHz, or 160 MHz | | RU10 to RU18, respectively |
| 18-36 | 80 MHz, 80+80 MHz, or 160 MHz | | RU19 to RU37, respectively |
| 37-40 | 20 MHz, 40 MHz, 80 MHz, 80+80 MHz, or 160 MHz | 52-tone RU | RU1 to RU4, respectively |
| 41-44 | 40 MHz, 80 MHz, 80+80 MHz, or 160 MHz | | RU5 to RU8, respectively |
| 45-52 | 80 MHz, 80+80 MHz, or 160 MHz | | RU9 to RU16, respectively |
| 53 and 54 | 20 MHz, 40 MHz, 80 MHz, 80+80 MHz, or 160 MHz | 106-tone RU | RU1 and RU2, respectively |
| 55 and 56 | 40 MHz, 80 MHz, 80+80 MHz, or 160 MHz | | RU3 and RU4, respectively |
| 57-60 | 80 MHz, 80+80 MHz, or 160 MHz | | RU5 to RU8, respectively |
| 61 | 20 MHz, 40 MHz, 80 MHz, 80+80 MHz, or 160 MHz | 242-tone RU | RU1 |
| 62 | 40 MHz, 80 MHz, 80+80 MHz, or 160 MHz | | RU2 |
| 63 and 64 | 80 MHz, 80+80 MHz, or 160 MHz | | RU3 and RU4, respectively |
| 65 | 40 MHz, 80 MHz, 80+80 MHz, or 160 MHz | 484-tone RU | RU1 |
| 66 | 80 MHz, 80+80 MHz, or 160 MHz | | RU2 |

(continued)

| B7-B1 of the resource unit allocation subfield (B7-B1 of the RU Allocation subfield) | Uplink bandwidth subfield (UL BW subfield) | Resource unit size (RU size) | Resource unit index (RU Index) |
|---|---|---|---|
| 67 | 80 MHz, 80+80 MHz, or 160 MHz | 996-tone RU | RU1 |
| 68 | 80+80 MHz, or 160 MHz | 2×996-tone RU | RU1 |

It can be learned that, in 802.11ax, a maximum value of a bandwidth of a PPDU is 160 MHz. When the bandwidth of the PPDU is 160 MHz, B0 indicates an index of a band (for example, 80 MHz) that an RU/MRU is on in the 160 MHz bandwidth, and B7-B1 indicate an RU/MRU index of the RU/MRU on the band. When the bandwidth is less than or equal to 80 MHz, B0 is set to 0 by default, and B7-B1 indicate an index of the RU/MRU in the bandwidth.

In this way, for an access point, when a bandwidth of a PPDU is less than or equal to 80 MHz, B0 is set to 0 by default; B7-B1 are determined based on an RU index of a location and a size of an allocated RU in an 80 MHz bandwidth; and then B7-B1 are sent to the station. For a station, the station receives the resource unit allocation indication subfield; when a bandwidth indicated by the UL BW subfield is less than or equal to 80 MHz, B0 is determined as 0, and optionally, the band indication may not be read; and the station may learn a specific allocated RU (namely, a location and a size) based on an index indicated by B7-B1 and Table 1.

For an access point, when a bandwidth of a PPDU is equal to 160 MHz, a value of B0 is determined based on a location and a size (for example, primary 80 MHz or secondary 80 MHz) of a band that an RU to be allocated to a station is on; and then an RU index of the allocated resource unit in corresponding 80 MHz is determined based on Table 5, to obtain values of B1-B7. For the station, when the bandwidth of the PPDU is equal to 160 MHz, the location and the size (for example, the primary 80 MHz or the secondary 80 MHz) of the band that the RU is on are determined based on the value of B0; and then a resource unit index of an index indicated by B1-B7 in corresponding 80 MHz is determined based on Table 5, to learn a specific allocated RU (namely, a location and a size).

3.2 Resource unit allocation indication of an EHT TB PPDU and a manner of interpreting corresponding fields

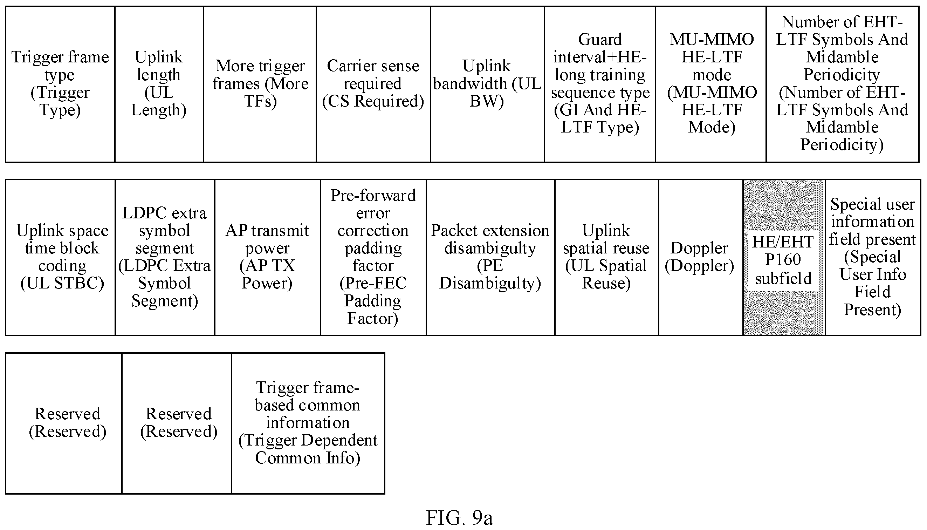

FIG. 9a is a schematic diagram of a common information field in a trigger frame in 802.11be. Compared a common information field in the trigger frame in 802.11be with that in a trigger frame in 802.11ax, a difference lies in that the common information field in the 802.11be includes an HE/EHT primary 160 subfield (P160 subfield) (B54), to indicate whether a PPDU sent on primary 160 MHz is in an HE form or an EHT form. The HE/EHT P160 subfield may further have more indication functions combined with another field.

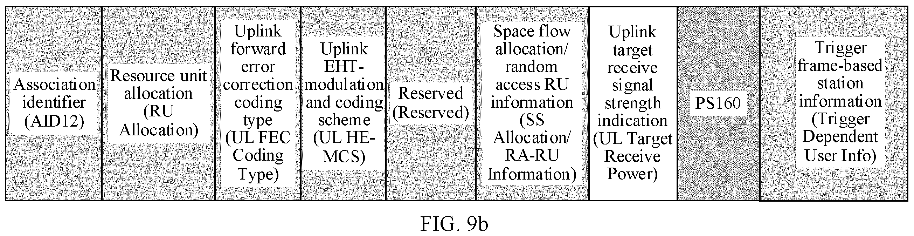

In 802.11be, in addition to the RU Allocation subfield and the UL BW subfield, an allocated RU/MRU needs to be determined combined with an uplink bandwidth extension subfield (UL BW Extension subfield) in a special user information field and PS160. A bandwidth is determined by both the UL BW subfield and the UL BW Extension subfield. FIG. 9b is a schematic diagram of a user information field in a trigger frame in 802.11be. Compared with a user information field in the trigger frame in 802. 11ax, a difference lies in that, a primary-secondary 160 subfield (PS160 subfield), PS160 for short, is added to the user information field, and a UL DCM subfield is deleted. In addition, interpretation meanings of some subfields are different from those in 802.11ax, for example, an RU Allocation subfield. The following describes interpretation of the RU Allocation subfield.

Mapping relationships of B0, B7-B1, and PS160 in the RU Allocation subfield are shown in Table 6.

**Table 6. Interpretation of the resource unit allocation subfield and the PS160 subfield of the trigger frame in 802.11be**

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-3: (indicate 80 MHz that an RU is in) | | 0-8 | 20, 40, 80, 160, or 320 | 26-tone RU | RU1 to RU9, respectively | $37 \times N + RU$ index |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37, respectively | |
| | | 37-40 | 20, 40, 80, 160, or 320 | 52-tone RU | RU1 to RU4, respectively | $16 \times N + RU$ index |
| | | 41-44 | 40, 80, 160, or 320 | | RU5 to RU8, respectively | |
| | | 45-52 | 80, 160, or 320 | | RU9 to RU16, respectively | |
| | | 53 and 54 | 20, 40, 80, 160, or 320 | 106-tone RU | RU1 and RU2, respectively | $8 \times N + RU$ index |
| | | 55 and 56 | 40, 80, 160, or 320 | | RU3 and RU4, respectively | |
| | | 57-60 | 80, 160, or 320 | | RU5 to RU8, respectively | |
| | | 61 | 20, 40, 80, 160, or 320 | 242-tone RU | RU1 | $4 \times N + RU$ index |
| | | 62 | 40, 80, 160, or 320 | | RU2 | |
| | | 63 and 64 | 80, 160, or 320 | | RU3 and RU4, respectively | |
| | | 65 | 40, 80, 160, or 320 | 484-tone RU | RU1 | $2 \times N + RU$ index |
| | | 66 | 80, 160, or 320 | | RU2 | |
| | | 67 | 80, 160, or 320 | 996-tone RU | RU1 | N+RU index |

(continued)

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-1: (indicate 160 MHz that an RU is in) | 0 | 68 | Reserved | | | Reserved |
| | 1 | | 160 or 320 | 2×996-tone RU | RU1 | X1+RU index |
| 0 | 0 | 69 | Reserved | | | Reserved |
| 0 | 1 | | | | | |
| 1 | 0 | | | | | |
| 1 | 1 | | 320 | 4×996-tone RU | RU1 | RU1 |
| 0-3: indicate 80 MHz that an MRU is in | | 70-72 | 20, 40, 80, 160, or 320 | 52+26-tone MRU | MRU1 to MRU3, respectively | 12×N+MRU index |
| | | 73-75 | 40, 80, 160, or 320 | 52+26-tone MRU | MRU4 to MRU6, respectively | |
| | | 76-81 | 80, 160, or 320 | 52+26-tone MRU | MRU7 to MRU12, respectively | |
| | | 82 and 83 | 20, 40, 80, 160, or 320 | 106+26-tone MRU | MRU1 and MRU2, respectively | 8×N+MRU index |
| | | 84 and 85 | 40, 80, 160, or 320 | 106+26-tone MRU | MRU3 and MRU4, respectively | |
| | | 86-89 | 80, 160, or 320 | 106+26-tone MRU | MRU5 to MRU8, respectively | |
| | | 90-93 | 80, 160, or 320 | 484+242-tone MRU | MRU1 to MRU4, respectively | 4×N+MRU index |
| 0-1: indicate 160 MHz that an MRU is in | 0 | 94 and 95 | 160 or 320 | 996+484-tone MRU | MRU1 and MRU2, respectively | 4×X1+MRU index |
| | 1 | | | | MRU3 and MRU4, respectively | |

(continued)

| PS160 subfield (PS160 subfield) | B0 of the resource unit allocation subfield (B0 of the RU Allocation subfield) | B7-B1 of the resource unit allocation subfield (B7-B1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-1: indicate 160 MHz that an MRU is in | 0 | 96-99 | 160 or 320 | 996+484+242-tone MRU | MRU1 to MRU4, respectively | 8×X1+MRU index |
| | 1 | | | | MRU5 to MRU8, respectively | |
| 0 | 0 | 100-103 | 320 | 2×996+484-tone MRU | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3 × 996-tone MRU | MRU1 | MRU index |
| 0 | 1 | | | | MRU2 | |
| 1 | 0 | | | | MRU3 | |
| 1 | 1 | | | | MRU4 | |
| 0 | 0 | 105 and 106 | 320 | 3×996+484-tone MRU | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved (Reserved) | Reserved | Reserved |

It can be learned from the foregoing Table 6 that, the mapping relationships of B0, B7-B 1, and PS160 in the RU Allocation subfield are as follows.

In primary 160 MHz, B0 of the RU Allocation subfield is set to 0, to indicate that RU/MRU allocation is applied to primary 80 MHz; or in the primary 160 MHz, B0 of the RU Allocation subfield is set to 1, to indicate that RU/MRU allocation is applied to secondary 80 MHz. In secondary 160 MHz, B0 of the RU Allocation subfield is set to 0, to indicate that RU/MRU allocation is applied to low frequency 80 MHz in the secondary 160 MHz; or in the secondary 160 MHz, B0 of the RU Allocation subfield is set to 1, to indicate that RU/MRU allocation is applied to high frequency 80 MHz in the secondary 160 MHz.

If the RU/MRU is less than or equal to the $2\times996$-tone RU, PS160 is set to 0, to indicate that the RU/MRU is applied to the primary 160 MHz; or PS160 is set to 1, to indicate that the RU/MRU is applied to the secondary 160 MHz. If the RU/MRU is greater than the $2\times996$-tone RU, PS160 and the RU Allocation subfield together indicate the RU/MRU index.

For the 26-tone RU, the 52-tone RU, the 106-tone RU, the 242-tone RU, the 484-tone RU, the 996-tone RU, the 52+26-tone MRU, the 106+26-tone MRU, and the 484+242-tone MRU, B7-B1 of the RU allocation subfield describe various possible indexes in one 80 MHz, to be specific, indexes indicated by B7-B1 describe possible RU/MRU indexes corresponding to the RUs/MRUs in one 80 MHz, and one index indicates one of the RUs/MRUs. For example, for the 26-tone RU, indexes 0-36 describe 26-tone RUs at different locations in one 80 MHz, and correspond to RU indexes 1-37. For another example, for the 52+26-tone MRU, indexes 70-81 describe 52+26-tone MRUs at different locations in one 80 MHz, and correspond to MRU indexes 1-12.

For the $2\times996$-tone RU, the 996+484-tone MRU, and the 996+484+242-tone MRU, B7-B1 of the RU allocation subfield describe various possible indexes in one 160 MHz, to be specific, indexes indicated by B7-B1 describe possible RU/MRU indexes corresponding to the RUs/MRUs in one 160 MHz, and one index indicates one of the RUs/MRUs. For example, for the $2\times996$-tone RU, an index 68 describes a $2\times996$-tone RU in one 160 MHz, and corresponds to an RU index 1. For another example, for the 996+484-tone MRU, indexes 94 and 95 describe 996+484-tone MRUs at different locations in one 160 MHz, and correspond to MRU indexes 1-4.

It can be learned that, if the RU/MRU is less than or equal to the $2\times996$-tone RU, B7-B1 in the RU Allocation subfield describe an RU/MRU index in one 80 MHz or one 160 MHz. Therefore, to enable parameters to complete logical-to-physical conversion, parameters N and X1 may be used, to learn a physical RU/MRU index of the RU/MRU in 320 MHz. N may be obtained according to the following formula:

$$N = 2 \times X1 + X0 \quad (1)$$

N indicates that the RU/MRU is in $(N+1)^{th}$ 80 MHz in absolute frequencies, X1 indicates that the RU/MRU is in $(X1+1)^{th}$ 160 MHz in the absolute frequencies, and X0 indicates that the RU/MRU is in $(X0+1)^{th}$ 80 MHz of the $(X1+1)^{th}$ 160 MHz.

For entries that need to use N and X1 in Table 6, mapping relationships of PS160, B0, X0, X1, and N need to be considered, as shown in Table 7. A station needs to complete logical-to-physical conversion of parameters to obtain an RU/MRU in 320 MHz.

**Table 7. How to enable parameters to complete logical-to-physical conversion to obtain an RU/MRU in 320 MHz**

| Bandwidth (MHz) | Logical input | | | Physical output (Physical output) | | |
|---|---|---|---|---|---|---|
| | Band configuration | PS160 subfield | B0 | X0 | X1 | N |
| 20/40/80 MHz | [P80] | 0 | 0 | 0 | 0 | 0 |
| 160 MHz | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |

(continued)

| Bandwidth (MHz) | Logical input | | | Physical output (Physical output) | | |
|---|---|---|---|---|---|---|
| | Band configuration | PS160 subfield | B0 | X0 | X1 | N |
| 320 MHz | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

Details are shown in Table 7.

For a bandwidth less than or equal to 80 MHz, PS160, B0, X0, and X1 are all set to 0.

For a 160 MHz bandwidth, PS160 and X1 are both set to 0, and values of B0 and X0 are shown in Table 7.

For a 320 MHz bandwidth, values of B0, X0, and X1 of PS160 are shown in Table 7.

The band configuration in Table 7 refers to a sequence of a primary 80 MHz channel (P80), a secondary 80 MHz channel (S80), and a secondary 160 MHz channel (S160) in the absolute frequencies, indicating a low frequency to a high frequency from left to right sequentially. For details, refer to the foregoing descriptions in FIG. 2 to FIG. 5.

In conclusion, a procedure for determining an RU/MRU index in 802.11be is as follows.

For a 26-tone RU, a 52-tone RU, a 106-tone RU, a 242-tone RU, a 484-tone RU, a 996-tone RU, a 52+26-tone MRU, a 106+26-tone MRU, and a 484+242-tone MRU:

1) obtain X1 and X0 based on an index indicated by PS160 and B0 in specific 80 MHz and a table;
2) calculate N based on X1 and X0 according to a formula (1); and
3) indicate a physical RU/MRU index based on N and B7-B1.

For a 2×996-tone RU, a 996+484-tone MRU, and a 996+484+242-tone MRU:

4) obtain X1 and X0 based on an index indicated by PS160 in specific 160 MHz and the table; and
5) indicate a physical RU/MRU index based on X1 and B7-B1.

For an RU/MRU greater than a 2×996-tone RU:
6) directly indicate an RU/MRU index by PS160, B0, and B7-B1.

It is found through research that, in 802.11be, because a frequency domain location of a PPDU includes a primary channel by default, a station may learn by default that an allocated RU/MRU is in a bandwidth including the primary channel. For example, for a 20 MHz bandwidth, the station determines the RU/MRU on P20; for a 40 MHz bandwidth, the station determines the RU/MRU on P40; for an 80 MHz bandwidth, the station determines the RU/MRU on P80; for a 160 MHz bandwidth, the station determines the RU/MRU on P160; and for a 320 MHz bandwidth, the station determines the RU/MRU on an entire 320 MHz wireless channel. Therefore, when the bandwidth is less than or equal to 160 MHz, the station only needs to determine the RU/MRU on the bandwidth including the primary channel.

Therefore, there are limitations on index ranges of B7-B1 in different bandwidths described in the foregoing Table 6 and limitations on values of PS160, B0, X0, and X1 in different bandwidths described in Table 7. For example, for a 26-tone RU, an index range of B7-B1 in a 20 MHz bandwidth is 0-8, and an index range of B7-B1 in a 40 MHz bandwidth is 0-17. For another example, when the bandwidth is equal to 160 MHz, the RU/MRU is determined on the P160 by default. Therefore, PS160 may be set to 0, and B0 indicates a band (namely, 80 MHz) that the RU/MRU is on in the 160 MHz bandwidth. When the bandwidth is less than or equal to 80 MHz, the RU/MRU is determined on P80 by default. Therefore, B0 and PS160 are set to 0 by default.

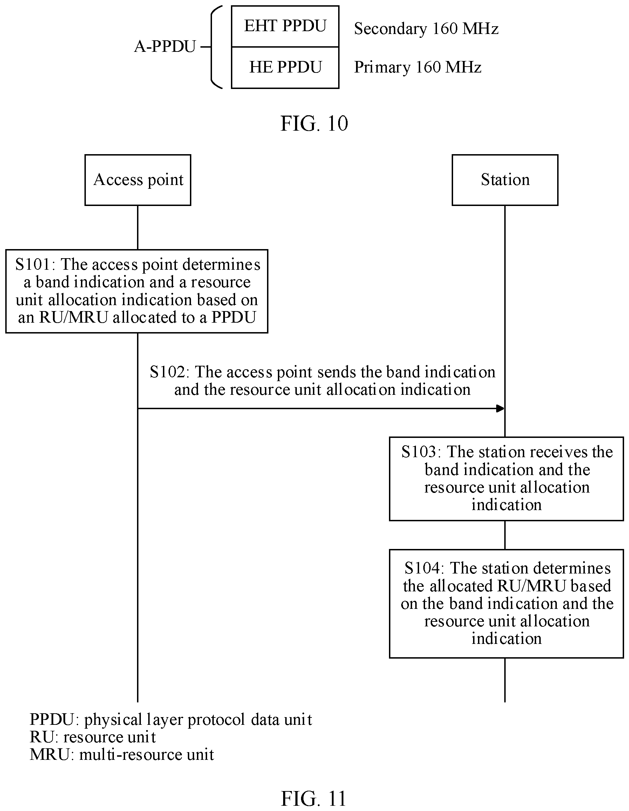

However, when the frequency domain location of the PPDU does not include the primary channel, a misconfiguration occurs if determining an RU/MRU index by using content described in Part 3.1 and Part 3.2. To be specific, an access point configures an incorrect RU/MRU index for the station, or the station incorrectly interprets an RU/MRU. As a result, the allocated RU/MRU cannot be correctly learned. For example, for an aggregated PPDU (Aggregated PPDU, A-PPDU) shown in FIG. 10, the A-PPDU includes a plurality of PPDUs, and the PPDUs may be of a same 802.11 version, or may be of different 802.11 versions. The PPDUs exist in a frequency range (for example, 320 MHz), and are orthogonally separated in frequency domain. As shown in FIG. 10, the A-PPDU includes an HE TB PPDU and an EHT TB PPDU, where a longitudinal direction is a frequency range, and different PPDUs occupy different frequency ranges. For example, bandwidths of the HE TB PPDU and the EHT TB PPDU are both 160 MHz, but the EHT TB PPDU corresponds to a frequency range of a secondary 160 MHz channel. If an RU/MRU of the EHT TB PPDU is configured by using the solution described in Part 3.2, a station corresponds to a primary 160 MHz channel based on an interpretation rule described in Part 3.2, in other words, an RU/MRU index misconfiguration occurs.

4. Resource allocation method

This application provides a resource allocation method 100. In the method 100, an access point may determine a band indication and a resource unit allocation indication based on an RU/MRU allocated to a PPDU, where the band indication indicates an index of a band of the RU/MRU, and an index range corresponding to the band indication in a first bandwidth is reused for an index range of the band indication; the resource unit allocation indication indicates an RU/MRU index of the RU or the MRU on the band, and an index range corresponding to the resource unit allocation indication in the first bandwidth is also reused for an index range of the resource unit allocation indication; and the first bandwidth is greater than a bandwidth of the PPDU. Further, the access point may send the band indication and the resource unit allocation indication. It can be learned that, in the method 100, the first bandwidth greater than the bandwidth of the PPDU is used as a determining input for an RU/MRU allocation indication, namely, a determining input for the foregoing Table 6 and Table 7. This can avoid an index misconfiguration problem that occurs because a frequency domain location of the PPDU does not include a primary channel.

In other words, in the method 100, because the first bandwidth is greater than the bandwidth of the PPDU, and may include a frequency range of the PPDU that the frequency domain location of the PPDU does not include the primary channel, the index range corresponding to the band indication in the first bandwidth is reused as the index range of the band indication. This helps an access point select, based on an actual band of the RU/MRU, an index of the band indicated by the band indication. In addition, because the band can correspond to the frequency range in which the primary channel is not included, the index range of the resource unit allocation indication in the first bandwidth is also reused for the index range corresponding to the resource unit allocation indication. This helps avoid an index misconfiguration problem that occurs when an index can correspond to only a primary 20 MHz channel or a primary 40 MHz channel because indexes are reduced when the bandwidth of the PPDU is 20 MHz/40 MHz.

This application provides a resource allocation method 200. In the method 200, an access point may determine a band indication and a resource unit allocation indication based on an RU/MRU allocated to a PPDU, where the band indication indicates an index of a band of the RU/MRU, and an index range corresponding to the band indication in a 320 MHz bandwidth is reused for an index range of the band indication; and the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication. Further, the access point may send the band indication and the resource unit allocation indication. It can be learned that, in the method 200, the index range corresponding to the band indication in the 320 MHz bandwidth is reused for the index range of the band indication. Therefore, the band can correspond to a frequency range that does not include a primary channel. In addition, when the bandwidth of the PPDU is less than or equal to 80 MHz, the index range corresponding to the resource unit allocation indication in the 80 MHz bandwidth is reused for the index range of the resource unit allocation indication, to avoid an RU/MRU index limitation problem that occurs because the bandwidth of the PPDU (namely, 20 MHz/40 MHz) is used as a determining input for resource allocation. Therefore, in the method 200, an index misconfiguration problem that occurs because a frequency domain location of the PPDU does not include the primary channel is avoided.

This application provides a resource allocation method 300. In the method 300, a receive end may receive a band indication and a resource unit allocation indication, where the band indication indicates an index of a band of an RU/MRU, and an index range corresponding to the band indication in a 320 MHz bandwidth is reused for an index range of the band indication; and the resource unit allocation indication indicates an RU/MRU index on the band; and when a bandwidth of a PPDU is less than 80 MHz, the RU/MRU index is equal to a sum of the RU/MRU index indicated by the resource unit allocation indication and an offset corresponding to the RU/MRU. Further, the receive end determines the band corresponding to the index indicated by the band indication, and determines the RU/MRU corresponding to the RU/MRU index on the band. The receive end may learn, through signaling or a predefinition, the offset corresponding to the allocated RU/MRU. It can be learned that, in the method 300, the index range corresponding to the band indication in the 320 MHz bandwidth is reused for the index range of the band indication. Therefore, the band can correspond to a frequency range that does not include a primary channel. In addition, to ensure that an RU/MRU misconfiguration does not occur, an index offset is added to a PPDU in a 20 MHz/40 MHz bandwidth to implement an RU/MRU indication.

This application provides a resource allocation method 400. In the method 400, an access point determines a band indication and a resource unit allocation indication of each PPDU based on an RU/MRU allocated to each PPDU in an A-PPDU, where the band indication indicates an index of a band of the RU/MRU; the resource unit allocation indication indicates an RU/MRU index on the band; an index range of the band indication of each PPDU is an index range of the band indication in a bandwidth of the PPDU; and an index range of the resource unit allocation indication of each PPDU is an index range of the resource unit allocation indication in the bandwidth of the PPDU; and sends each band range indication and each resource unit allocation indication. It can be learned that, in the method 400, each PPDU has a corresponding set of the band indication and the resource unit allocation indication, to help remove a binding relationship between the bandwidth of the PPDU and a primary channel, so that an index misconfiguration problem that occurs because a frequency domain location of the PPDU does not include the primary channel is avoided.

It can be learned that, from the resource allocation method 100 to the resource allocation method 300, the index range corresponding to the band indication in the first bandwidth is reused for the index range of the band indication, or the index range corresponding to the band indication in the 320 MHz bandwidth is reused for the index range of the band indication. In other words, the first bandwidth or the 320 MHz bandwidth is used as a reference for the index range of the band indication. Therefore, in the resource allocation method 100, the resource unit allocation indication may be completed by using Table 3 and Table 4; or in the resource allocation method 200, the resource unit allocation indication is completed by using Table 1 and Table 2; or in the resource allocation method 200, the resource unit allocation indication is completed by using Table 3 and Table 4, and in the resource allocation method 300, the resource unit allocation indication is completed by using Table 3, Table 6, and an offset addition manner. In this way, an index misconfiguration problem is resolved.

In other words, when the PPDU is one of PPDUs in the A-PPDU, or when the frequency domain location of the PPDU does not include a primary 20 MHz channel, or for a release 2 (release 2, R2) device, the access point or the station may complete the resource unit allocation indication in a manner of using Table 1 and Table 2, or in a manner of using Table 3 and Table 4, or in a manner of using Table 3, Table 6, and offset addition. Correspondingly, when the PPDU is not one of the PPDUs in the A-PPDU (for example, the PPDU is the EHT PPDU in 802.11be), or when the frequency domain location of the PPDU includes the primary 20 MHz channel, or for a release 1 (release 1, R1) device, the access point or the station may complete the resource unit allocation indication in a manner of using Table 6 and Table 7. The R1 device is a device that implements a first part of standards of 802.11be, and the R2 device is a device that implements a second part of the standards of 802.11be, where the second part of the standards is an advanced version of the first part of the standards. In other words, the R2 device is an evolved device of the R1 device.

Optionally, the station may determine, based on a trigger frame type, to complete the resource unit allocation indication in a manner of using Table 1 and Table 2, or in a manner of using Table 3 and Table 4, or in a manner of using Table 3, Table 6, and offset addition. The trigger frame type may be a trigger frame type related to the A-PPDU. Correspondingly, the station may also complete, based on a trigger frame type, the resource unit allocation indication by using Table 6 and Table 7. The trigger frame type may be a trigger frame type unrelated to the A-PPDU, for example, a trigger frame type related to the EHT PPDU.

Optionally, the station may identify, in the following manners, that a trigger frame-based PPDU is the A-PPDU, or the access point notifies, in the following manners, the station that a trigger frame-based PPDU is the A-PPDU, so that the station may learn that the PPDU that needs to be received is one of the PPDUs in the A-PPDU.

Manner 1: A physical layer preamble includes a first indication. When the first indication is 0, it indicates that the trigger frame-based PPDU is the A-PPDU; and when the first indication is 1, it indicates that the trigger frame-based PPDU is the A-PPDU. Optionally, the first indication may be referred to as an A-PPDU indication.

Manner 2: A medium access control (medium access control, MAC) layer includes a first indication. A function of the first indication is the same as that in Manner 1.

Optionally, the first indication may be in a trigger frame. For example, the first indication may be in a common information field, or a user information field such as a special user information field.

Optionally, the first indication may be in a MAC frame that carries triggered response scheduling control (Triggered response scheduling Control, TRS Control). In other words, this application is applicable to resource allocation in a scenario in which the MAC frame carries the TRS Control.

Manner 3: When a frequency domain location of the PPDU does not include the primary 20 MHz channel, the station identifies that trigger frame-based PPDU is the A-PPDU.

Optionally, that the station determines that a frequency domain range of the PPDU does not include the primary 20 MHz channel may be determined based on a docked location of the station and a bandwidth of the PPDU. For example, when the docked location of the station is on a secondary channel, for example, a secondary 80 MHz channel, but the bandwidth of the PPDU is 80 MHz, it may be determined that the frequency domain location of the PPDU does not include the primary 20 MHz channel. Correspondingly, that the station determines that the frequency domain range of the PPDU includes the primary 20 MHz channel may also be determined based on the docked location of the station and the bandwidth of the PPDU. This is not limited in this application.

The following provides detailed descriptions with reference to the accompanying drawings.

4.1. Resource allocation method 100

Refer to FIG. 11. FIG. 11 is a schematic flowchart of a resource allocation method 100 according to an embodiment of this application. In FIG. 11, interaction between an access point and a station is used as an example for description. The resource allocation method 100 may include but is not limited to the following steps.

S101: The access point determines a band indication and a resource unit allocation indication based on an RU/MRU allocated to a PPDU.

The band indication indicates an index of a band of the RU/MRU, and an index range corresponding to the band indication in a first bandwidth is reused for an index range corresponding to the band indication. The first bandwidth is greater than a bandwidth of the PPDU. The band indication is formed by a primary-secondary 160 (PS 160) subfield and B0 of a resource unit allocation subfield in a trigger frame. The PS160 subfield is referred to as PS160 for short.

The index range corresponding to the band indication in the first bandwidth is reused for the index range corresponding to the band indication. To be specific, regardless of the bandwidth of the PPDU, index ranges of PS160 and B0 are both index ranges corresponding to PS160 and B0 in the first bandwidth. As shown in Table 3, by using an example in which the first bandwidth is 320 MHz, compared with Table 7, in Table 3, limitations on values of PS160, B0, X0, and X1 are eliminated when the bandwidth is 20 MHz, 40 MHz, 80 MHz, or 160 MHz. For example, the following limitations are eliminated: For a bandwidth less than or equal to 80 MHz, PS160, B0, X0, and X1 are all set to 0; and for a 160 MHz bandwidth, PS160 and X1 are both set to 0.

That the access point determines a band indication based on an RU/MRU allocated to a PPDU may include: The access point determines a size of the RU/MRU allocated to the PPDU. When the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, PS160 and B0 indicate which 80 MHz the RU/MRU is in, or PS160 and B0 indicate 80 MHz that the RU/MRU is in, for example, an index of specific 80 MHz; and when the RU is a 2×996-tone RU, or the MRU is a 996+484-tone MRU or a 996+484+242-tone MRU, the PS160 subfield indicates which 160 MHz the RU/MRU is in, or the PS160 subfield indicates 160 MHz that the RU/MRU is in, for example, an index of specific 160 MHz. Therefore, the access point may determine PS160 and B0 corresponding to a location of an 80 MHz/160 MHz bandwidth that the RU/MRU is on.

In addition, in this application, for an RU/MRU greater than the 2×996-tone RU, PS160, B0, and B7-B1 directly indicate an RU/MRU index, which is consistent with a method described in an EHT PPDU in Part 3.2. This is because for the RU/MRU greater than the 2×996-tone RU, there is no RU/MRU index misconfiguration situation because the bandwidth is 320 MHz. Therefore, the method described in the EHT PPDU in Part 3.2 is still used.

The resource unit allocation indication indicates an RU/MRU index of the RU/MRU on the band, and an index range corresponding to the resource unit allocation indication in the first bandwidth is reused for an index range of the resource unit allocation indication. When the first bandwidth is 320 MHz, the index range of the resource unit allocation indication is the same as an index range corresponding to the resource unit allocation indication in the 80 MHz/160 MHz bandwidth. Therefore, as shown in Table 4, in this application, regardless of the bandwidth of the PPDU, when the RU/MRU is the 26-tone RU, the 52-tone RU, the 106-tone RU, the 242-tone RU, the 484-tone RU, or the 996-tone RU, or the MRU is the 52+26-tone MRU, the 106+26-tone MRU, or the 484+242-tone MRU, B7-B1 indicate each RU/MRU index in one 80 MHz; and when a resource unit size is the 2×996-tone RU, the 996+484-tone MRU, or the 996+484+242-tone MRU, B7-B1 indicate each RU/MRU index in one 160 MHz.

It can be learned that, regardless of the bandwidth of the PPDU, an index range corresponding to B7-B1 in 320 MHz is reused for an index range of B7-B1. For example, when the RU/MRU is the 26-tone RU, indexes indicated by B7-B1 may be an index range of 320 MHz in Table 4, namely, 0-36 shown in Table 4, so that any one of 37 26-tone RUs in one 80 MHz can be indicated, thereby avoiding an index misconfiguration problem. However, the bandwidth of the PPDU in Table 6 is 20 MHz, and indexes indicated by B7-B1 can only be 0-8. As a result, when the bandwidth is 20 MHz, a 26-tone RU on a secondary channel other than the primary channel cannot be allocated to the station, in other words, an index misconfiguration problem of the 26-tone RU occurs.

Similarly, in this application, for an RU/MRU greater than the 2×996-tone RU, PS160 and B7-B0 together indicate an RU/MRU index, which is consistent with a method described in an EHT PPDU in Part 3.2. This is because for the RU/MRU greater than the 2×996-tone RU, there is no RU/MRU index misconfiguration situation because the bandwidth is 320 MHz. Therefore, the method described in the EHT PPDU in Part 3.2 is still used.

That the access point determines a resource unit allocation indication based on an RU/MRU allocated to a PPDU may include: When the RU/MRU is the 26-tone RU, the 52-tone RU, the 106-tone RU, the 242-tone RU, the 484-tone RU, or the 996-tone RU, or the MRU is the 52+26-tone MRU, the 106+26-tone MRU, or the 484+242-tone MRU, the access point determines X1, X0, and N based on PS160, B0, and Table 3; and the access point determines B7-B1 based on N, a location and a size of the RU/MRU in the 80 MHz/160 MHz band, and Table 4. Alternatively, when the resource unit size is the 2×996-tone RU, the 996+484-tone MRU, or the 996+484+242-tone MRU, the access point determines B0 and X1 based on PS160 and Table 3; and the access point determines B7-B1 based on X1, a location and a size of an RU/MRU in the 80 MHz/160 MHz band, and Table 4.

For example, the bandwidth of the PPDU is equal to 20 MHz, and the first bandwidth is 320 MHz. When the access point determines that the RU allocated to the station is a 26-tone RU1 on a secondary 20 MHz channel, the access point may determine that the index of the band indication is 0 based on a fact that a band that the 26-tone RU1 on the secondary 20 MHz channel is on is a primary 80 MHz channel and Table 3. The index range corresponding to the resource unit allocation indication in the first bandwidth is also reused for the index range of the resource unit allocation indication, and it can be learned that an index range corresponding to a 26-tone RU in the 320 MHz bandwidth is 0-36 based on Table 4. Therefore, the access point may determine, based on the 26-tone RU1 on the secondary 20 MHz channel, that the RU index indicated by the resource unit allocation indication on the primary 80 MHz channel is 9. Therefore, a value of the band indication sent by the access point is 0, and a value of the resource unit allocation indication is 9.

S102: The access point sends the band indication and the resource unit allocation indication.

S103: The station receives the band indication and the resource unit allocation indication.

S104: The station determines the allocated RU/MRU based on the band indication and the resource unit allocation indication.

That the station determines the allocated RU/MRU based on the band indication and the resource unit allocation indication includes the following steps.

For the 26-tone RU, the 52-tone RU, the 106-tone RU, the 242-tone RU, the 484-tone RU, or the 996-tone RU, or the 52+26-tone MRU, the 106+26-tone MRU, or the 484+242-tone MRU: the station determines specific 80 MHz indicated by PS160 and B0; the station determines logical-to-physical conversion of PS160 and B0 based on Table 3, to obtain X0, X1, and N; the station determines an RU/MRU index based on N, B7-B1, and Table 4; and the station determines the RU/MRU corresponding to the RU/MRU index in the 80 MHz indicated by PS160 and B0. Optionally, the station may first determine that N is required based on Table 4, and then determine X0, X1, and N based on Table 3.

For the 2×996-tone RU, the 996+484-tone MRU, or the 996+484+242-tone MRU: the station determines specific 80 MHz indicated by PS160 and B0; the station determines logical-to-physical conversion of PS160 and B0 based on Table 3, to obtain X0, X1, and N; the station determines an RU/MRU index based on X1, B7-B1, and Table 4; and the station determines the RU/MRU corresponding to the RU/MRU index in the 80 MHz indicated by PS160 and B0. Optionally, the station may first determine that X1 is required based on Table 4, and then determine X0, X1, and N based on Table 3.

For an RU/MRU greater than the 2×996-tone RU: the station determines an RU/MRU index based on PS160, B7-B0, and Table 4; and the station determines the RU/MRU corresponding to the RU/MRU index.

It can be learned that, for an RU/MRU less than or equal to the 2×996-tone RU, the station determines, based on Table 3 and Table 4, an RU/MRU index and the RU/MRU corresponding to the RU/MRU index in specific 80 MHz/160 MHz. The RU/MRU greater than the 2×996-tone RU may be determined by the station based on PS160, B7-B0, and Table 5, to help avoid an index misconfiguration problem of the RU/MRU allocated to the station.

In another expression, when the bandwidth of the PPDU is 20/40/80/160/320 MHz, settings of PS160, B0, X0, and X1 described in Table 3 are used, and are shown in Table 3. For the 26-tone RU, the 52-tone RU, the 106-tone RU, the 242-tone RU, the 484-tone RU, or the 996-tone RU, or the 52+26-tone MRU, the 106+26-tone MRU, or the 484+242-tone MRU, an RU/MRU index indicated by B7-B1 describes an index indicated by PS160 and B0 in specific 80 MHz. For the 2×996-tone RU, the 996+484-tone MRU, or the 996+484+242-tone MRU, an RU/MRU index indicated by B7-B1 describes an index indicated by PS160 in 160 MHz. For an RU/MRU greater than the 2×996-tone RU, PS160 and an RU Allocation subfield together indicate an RU/MRU index.

In another embodiment, the first bandwidth is 160 MHz. A difference from the foregoing embodiment lies in that, because the bandwidth of the PPDU is less than the first bandwidth, in an embodiment in which the first bandwidth is 160 MHz, the bandwidth of the PPDU is 20 MHz, 40 MHz, or 80 MHz, that the parameters complete logical-to-physical conversion may be shown in Table 8, and mapping relationships of PS160, B0, and B7-B1 are shown in Table 9. To be specific, when the RU/MRU is the 26-tone RU, the 52-tone RU, the 106-tone RU, the 242-tone RU, the 484-tone RU, or the 996-tone RU, or the MRU is the 52+26-tone MRU, the 106+26-tone MRU, or the 484+242-tone MRU, B7-B1 describe an index of each RU/MRU in one 80 MHz, and an index range corresponding to a 160 MHz bandwidth is reused for an index range corresponding to B7-B1. Therefore, when the first bandwidth is 160 MHz, Table 8 and Table 9 are used to implement interpretation of B7-B0 and PS160.

**Table 8. How to enable parameters to complete logical-to-physical conversion to obtain an RU/MRU in 160 MHz**

| Bandwidth (MHz) | Logical input | | | Physical output (Physical output) | | |
|---|---|---|---|---|---|---|
| | Band configuration | PS160 | B0 | X0 | X1 | N |
| 20/40/80/160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |

**Table 9. Mapping relationships of PS160, B0, and B7-B1**

| PS160 subfield (PS160 subfield) | B0 of the resource unit allocation subfield (B0 of the RU Allocation subfield) | B7-B1 of the resource unit allocation subfield (B7-B 1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-3: (indicate 80 MHz that an RU is in) | | 0-36 | 20, 40, 80, or 160 | 26 | RU1 to RU37, respectively | $37 \times N$+RU index |
| | | 37-52 | 20, 40, 80, or 160 | 52 | RU1 to RU16, respectively | $16 \times N$+RU index |
| | | 53-60 | 20, 40, 80, or 160 | 106 | RU1 to RU8, respectively | $8 \times N$+RU index |
| | | 61-64 | 20, 40, 80, or 160 | 242 | RU1 to RU4, respectively | $4 \times N$+RU index |
| | | 65-66 | 40, 80, or 160 | 484 | RU1 to RU2, respectively | $2 \times N$+RU index |
| | | 67 | 80 or 160 | 996 | RU1 | N+RU index |
| | 0 | 68 | Reserved | | | Reserved |
| | | | | | | |
| 0-1: (indicate 160 MHz that an RU is in) | 1 | | 160 | $2 \times 996$ | RU1 | X1+RU index |
| Any | Any | 69 | Any | Reserved | Reserved | Reserved |

(continued)

| PS160 subfield (PS160 subfield) | B0 of the resource unit allocation subfield (B0 of the RU Allocation subfield) | B7-B1 of the resource unit allocation subfield (B7-B 1 of the RU Allocation subfield) | Bandwidth (Bandwidth) (MHz) | RU/MRU size (RU/MRU size) | RU/MRU index (RU/MRU index) | Physical RU/MRU index (PHY RU/MRU index) |
|---|---|---|---|---|---|---|
| 0-3: indicate 80 MHz that an MRU is in | | 70-81 | 20, 40, 80, or 160 | 52+26 | MRU1 to MRU12, respectively | 12×N+M RU index |
| | | 82-89 | 20, 40, 80, or 160 | 106+26 | MRU1 to MRU4, respectively | 8×N+MR U index |
| | | 90-93 | 80 or 160 | 484+242 | MRU1 to MRU4, respectively | 4×N+MR U index |
| 0-1: indicate 160 | 0 | 94 and 95 | 160 | 996+484 | MRU1 and MRU2, respectively | 4×X1+M RU index |
| MHz that an MRU is in | 1 | | | | MRU3 and MRU4, respectively | |
| 0-1: indicate 160 MHz that an MRU is in | 0 | 96-99 | 160 | 996+484+ 242 | MRU1 to MRU4, respectively | 8×X1+M RU index |
| | 1 | | | | MRU5 to MRU8, respectively | |
| Any | Any | 100-127 | Any | Reserved | Reserved | Reserved |

Optionally, the bandwidth shown in Table 8 to Table 9 may not include 160 MHz. For example, if the 160 MHz bandwidth is used as a determining input for Table 8 to Table 9, the bandwidth shown in Table 8 to Table 9 includes 160 MHz. If a bandwidth of a PPDU in an A-PPDU is used as the determining input for Table 8 to Table 9, because a bandwidth of the A-PPDU is greater than a bandwidth of each PPDU, the bandwidth shown in Table 8 to Table 9 may not include 160 MHz, and correspondingly, an RU/MRU greater than 160 MHz may not be solved in Table 8 to Table 9.

Optionally, in the resource allocation method 100, the resource unit allocation indication may be completed by using Table 8 and Table 9. When the PPDU is one of PPDUs in an A-PPDU, or when a frequency domain location of the PPDU does not include a primary 20 MHz channel, or for a release 2 (release 2, R2) device, the access point or the station may complete the resource unit allocation indication in a manner of using Table 8 and Table 9. In addition, for descriptions of related content in this implementation, refer to the foregoing descriptions. Details are not described herein again.

In still another embodiment, the PPDU is a PPDU in an A-PPDU, the A-PPDU has a corresponding bandwidth indication, and the first bandwidth is a bandwidth of the A-PPDU. Optionally, the bandwidth of the A-PPDU may be 160 MHz/320 MHz. The bandwidth of the A-PPDU is 160 MHz, and by using Table 8 and Table 9, the band indication and the resource unit allocation indication may be determined, or the band indication and the resource unit allocation indication may be interpreted. The bandwidth of the A-PPDU is 320 MHz, and by using Table 3 and Table 4, the band indication and the resource unit allocation indication may be determined, or the band indication and the resource unit allocation indication may be interpreted.

In addition, in this application, when the bandwidth of the PPDU is 80 HMz, 160 MHz, or 320 MHz, each 20 MHz supports various 52+26-tone MRUs and various 106+26-tone MRUs. This is because when the bandwidth of the PPDU is 20 MHz or 40 MHz, each 20 MHz supports various 52+26-tone MRUs and various 106+26-tone MRUs, for example, indexes for small size MRUs in an OFDMA 20 MHz EHT PPDU (Indexes for small size MRUs in an OFDMA 20 MHz EHT PPDU) shown in Table 10, and indexes for small size MRUs in an OFDMA 40 MHz EHT PPDU (Indexes for small size MRUs in an OFDMA 40 MHz EHT PPDU) shown in Table 11. However, when the bandwidth of the PPDU is 80 MHz, a 52+26-tone MRU1 in first 20 MHz and a 52+26-tone MRU3 in second 20 MHz in each 40 MHz are not defined or not supported; and a 106+26-tone MRU2 and a 106+26-tone MRU3 in each 40 MHz are not defined or not supported. To be specific, as shown in Table 12, the 52+26-tone MRU1, a 52+26-tone MRU6, a 52+26-tone MRU7, a 52+26-tone MRU12, the 106+26-tone MRU2, the 106+26-tone MRU3, a 106+26-tone MRU6, and a 106+26-tone MRU7 are not supported or not defined. Therefore, in this application, to reuse the index range corresponding to the resource unit allocation indication in the first bandwidth and avoid an index misconfiguration, triggering and sending of such MRUs that are not defined or not supported may be supported in the PPDU again. For example, for an 80 MHz EHT PPDU in Table 12, 52+26-tone MRUs whose index numbers are 1, 6, 7, and 12, and 106+26-tone MRUs whose index numbers are 2, 3, 6, and 7 may be triggered and sent. In other words, compared with Table 6, in Table 4, 52+26-tone MRUs whose index numbers are 1, 6, 7, and 12, and 106+26-tone MRUs whose index numbers are 2, 3, 6, and 7 may be triggered and sent.

**Table 10. Indexes for small size MRUs in an OFDMA 20 MHz EHT PPDU (Indexes for small size MRUs in an OFDMA 20 MHz EHT PPDU)**

| MRU type (type) | MRU index | MRU combination (combination) |
|---|---|---|
| 52+26-tone MRU | MRU1 | 52-tone RU2+26-tone RU2 |
| | MRU2 | 52-tone RU2+26-tone RU5 |
| | MRU3 | 52-tone RU3+26-tone RU8 |
| 106+26-tone MRU | MRU1 | 106-tone RU1+26-tone RU5 |
| | MRU2 | 106-tone RU2+26-tone RU5 |

**Table 11. Indexes for small size MRUs in an OFDMA 40 MHz EHT PPDU (Indexes for small size MRUs in an OFDMA 40 MHz EHT PPDU)**

| MRU type | MRU index | MRU combination |
|---|---|---|
| 52+26-tone MRU | MRU1 | 52-tone RU2+26-tone RU2 |
| | MRU2 | 52-tone RU2+26-tone RU5 |
| | MRU3 | 52-tone RU3+26-tone RU8 |
| | MRU4 | 52-tone RU6+26-tone RU11 |
| | MRU5 | 52-tone RU6+26-tone RU14 |
| | MRU6 | 52-tone RU7+26-tone RU17 |
| 106+26-tone MRU | MRU1 | 106-tone RU1+26-tone RU5 |
| | MRU2 | 106-tone RU2+26-tone RU5 |
| | MRU3 | 106-tone RU3+26-tone RU14 |
| | MRU4 | 106-tone RU4+26-tone RU14 |

**Table 12. Indexes for small size MRUs in an OFDMA 80 MHz EHT PPDU (Indexes for small size MRUs in an OFDMA 80 MHz EHT PPDU)**

| MRU type | MRU index | MRU combination |
|---|---|---|
| 52+26-tone MRU | MRU1 | Not defined |
| | MRU2 | 52-tone RU2+26-tone RU5 |
| | MRU3 | 52-tone RU3+26-tone RU8 |
| | MRU4 | 52-tone RU6+26-tone RU11 |
| | MRU5 | 52-tone RU6+26-tone RU14 |
| | MRU6 | Not defined |
| | MRU7 | Not defined |
| | MRU8 | 52-tone RU10+26-tone RU24 |
| | MRU9 | 52-tone RU11+26-tone RU27 |
| | MRU10 | 52-tone RU14+26-tone RU30 |
| | MRU11 | 52-tone RU14+26-tone RU33 |
| | MRU12 | Not defined |
| 106+26-tone MRU | MRU1 | 106-tone RU1+26-tone RU5 |
| | MRU2 | Not defined |
| | MRU3 | Not defined |
| | MRU4 | 106-tone RU4+26-tone RU14 |
| | MRU5 | 106-tone RU5+26-tone RU24 |
| | MRU6 | Not defined |
| | MRU7 | Not defined |
| | MRU8 | 106-tone RU8+26-tone RU33 |

OFDMA transmission is a multi-user communication mechanism, and is applicable to data frame exchange between an AP and a STA in the 802.11ax standard and later. An entire transmission bandwidth may be divided into a plurality of resource units, and the resource units are separately allocated to different users. In non-OFDMA transmission, an entire transmission bandwidth is used as a whole for single-user (single user, SU) or MU-MIMO transmission. Therefore, in this application, when the bandwidth of the PPDU is 20 MHz and the resource unit is a 242-tone RU, the 242-tone RU is a non-OFDMA 242-tone RU. In other words, when learning, based on a bandwidth field, that the bandwidth of the PPDU is 20 MHz, and learning, based on a resource unit allocation indication field, that the resource unit is the 242-tone RU, the station may determine that a subcarrier format plan (tone plan) of the 242-tone RU is the non-OFDMA 242-tone RU.

It can be learned that, in the resource unit allocation method 100 in this application, limitations, for example, as shown in Table 7, for a bandwidth less than or equal to 80 MHz, PS 160, B0, X0, and X1 are all set to 0; and for a 160 MHz bandwidth, PS 160 and X1 are both set to 0, are no longer limited, but index ranges of PS160 and B0 in a large bandwidth such as the first bandwidth are reused for index ranges of PS 160 and B0, in other words, the large bandwidth is used as a reference. In addition, in the method, values of B7-B1 shown in Table 6 are not limited, but an index range of B7-B 1 in a large bandwidth such as the first bandwidth are also reused for an index range of B7-B1, in other words, the large bandwidth is used as a reference, so that any RU/MRU in any 80 MHz/160 MHz can be covered, thereby avoiding an RU/MRU index misconfiguration problem.

4.2. Resource unit allocation method 200

A difference between the resource allocation method 200 and the resource allocation method 100 lies in that, a band indication indicates an index of a band of an RU/MRU, and an index range corresponding to the band indication in a 320 MHz bandwidth is reused as an index range of the band indication; and a resource unit allocation indication indicates an index of the RU/MRU on the band, and when a bandwidth of a PPDU is less than or equal to 80 MHz, an index range corresponding to the resource unit allocation indication in an 80 MHz bandwidth is reused for an index range of the resource unit allocation indication.

In this way, for the band indication, in the resource allocation method 200, the index range corresponding to the band indication in the 320 MHz bandwidth is reused for the index range of the band indication. Therefore, the band indication is still interpreted by using the foregoing Table 4, to obtain specific 80 MHz/160 MHz indicated by the band indication, and obtain X0, X1, and N.

For the resource unit allocation indication, when the bandwidth of the PPDU is less than or equal to 80 MHz, the index range corresponding to the resource unit allocation indication in the 80 MHz bandwidth is reused for the index range of the resource unit allocation indication.

In an implementation, mapping relationships of PS160 and B7-B1 shown in Table 2 may be obtained based on Table 6, and logical-to-physical conversion of parameters shown in Table 1 may be obtained based on Table 7. To be specific, for Table 6 and Table 7, when the bandwidth of the PPDU is less than or equal to 80 MHz, the 80 MHz bandwidth is used as an input for Table 6 and Table 7, to obtain an RU/MRU indicated by PS160 and B7-B1; when the bandwidth of the PPDU is equal to 160 MHz, the 160 MHz bandwidth is used as an input for Table 6 and Table 7, to obtain the RU/MRU indicated by PS160 and B7-B1; and when the bandwidth of the PPDU is equal to 320 MHz, the 320 MHz bandwidth is used as an input for Table 6 and Table 7, to obtain the RU/MRU indicated by PS160 and B7-B1.

In another implementation, mapping relationships of PS160 and B7-B1 shown in Table 4 may be obtained based on Table 6, and logical-to-physical conversion of parameters shown in Table 3 may be obtained based on Table 7. To be specific, for Table 6 and Table 7, when the bandwidth of the PPDU is less than or equal to 80 MHz, an index range corresponding to B7-B1 in the 80 MHz bandwidth is reused for an index range of B7-B1. The index range corresponding to B7-B1 in the 80 MHz bandwidth is the same as an index range corresponding to the 160 MHz bandwidth or the 320 MHz bandwidth. Therefore, regardless of the bandwidth of the PPDU, a same index range is used.

It can be learned that, in the resource unit allocation method 200, limitations, for example, as shown in Table 7, for a bandwidth less than or equal to 80 MHz, PS160, B0, X0, and X1 are all set to 0; and for a 160 MHz bandwidth, PS160 and X1 are both set to 0, are no longer limited, but index ranges of PS160 and B0 in 320 MHz is reused for index ranges of PS160 and B0. In addition, in the method, values of B7-B1 in a 20 MHz/40 MHz bandwidth shown in Table 6 are no longer limited, but the index range corresponding to B7-B1 in the 80 MHz bandwidth is reused for the index range of B7-B1, in other words, 80 MHz is used as a reference for the index range of B7-B1, as shown in Table 1 and Table 2, or as shown in Table 3 and Table 4. In this way, an RU/MRU index misconfiguration problem is avoided because index ranges corresponding to 20 MHz and 40 MHz used as inputs for Table 6 and Table 7 are reduced.

Optionally, the resource unit allocation method 200 may also be expressed as follows: Eliminate limitations on values of PS160, B0, X0, and X1 when a bandwidth is 20 MHz, 40 MHz, 80 MHz, or 160 MHz (to be specific, eliminate limitations, for example, for a bandwidth less than or equal to 80 MHz, PS160, B0, X0, and X1 are all set to 0; and for a 160 MHz bandwidth, PS160 and X1 are both set to 0); and in addition, when the bandwidth is less than or equal to 80 MHz, 80 MHz is used as an input for interpreting PS160, B0, and B7-B1. In this way, logical-to-physical conversion of parameters may be implemented by using Table 1; and mapping relationships of PS160, B0, and B7-B1 may be implemented by using Table 2.

Optionally, the resource unit allocation method 200 may also be expressed as follows: Eliminate limitations on values of PS160, B0, X0, and X1 when a bandwidth is 20 MHz, 40 MHz, 80 MHz, or 160 MHz; and in addition, when the bandwidth is less than 80 MHz, an index range of 80 MHz is allowed to be actually used for B7-B1. In this way, logical-to-physical conversion of parameters may be implemented by using the following Table 7; and mapping relationships of PS160, B0, and B7-B1 may be implemented by using the foregoing Table 6. Therefore, when the bandwidth is less than 80 MHz, the index range of 80 MHz, instead of an index range of a 20 MHz/40 MHz bandwidth, is allowed to be actually used for B7-B1. In this way, a misconfiguration problem that occurs because an index cannot be covered is avoided. 4.3. Resource unit allocation method 300

A difference between the resource unit allocation method 300 and the resource unit allocation method 200 lies in that, in addition to eliminating limitations on values of PS160, B0, X0, and X1 when a bandwidth is 20 MHz, 40 MHz, 80 MHz, or 160 MHz, the resource unit allocation method 300 may implement an indication of an RU/MRU in 20 MHz/40 MHz by adding an offset. To be specific, when a bandwidth is equal to 20 MHz, 40 MHz, 80 MHz, 160 MHz, or 320 MHz, 20 MHz, 40 MHz, 80 MHz, 160 MHz, or 320 MHz is still used as a determining input for Table 7. However, to avoid an RU/MRU misconfiguration, an index offset may be added to a PPDU in 20 MHz/40 MHz to implement the indication of the RU/MRU.

The method 300:

A receive end receives a band indication and a resource unit allocation indication, where the band indication indicates an index of a band of an RU/MRU, and an index range corresponding to the band indication in a 320 MHz bandwidth is reused for an index range of the band indication; and the resource unit allocation indication indicates an RU/MRU index on the band; and when a bandwidth of a PPDU is less than 80 MHz, the RU/MRU index is equal to a sum of the RU/MRU index indicated by the resource unit allocation indication and an offset corresponding to the RU/MRU.

The receive end determines the band corresponding to the index indicated by the band indication, and determines the RU/MRU corresponding to the RU/MRU index on the band.

The receive end may learn, through signaling or a predefinition, the offset corresponding to the allocated RU/MRU. In this way, that the receive end determines the band corresponding to the index indicated by the band indication includes: When the bandwidth of the PPDU is less than 80 MHz, the receive end determines that the RU/MRU index is equal to the sum of the RU/MRU index indicated by the resource unit allocation indication and the offset corresponding to the RU/MRU.

It can be learned that, in the method 300, the index range corresponding to the band indication in the 320 MHz bandwidth is reused for the index range of the band indication. Therefore, the band can correspond to a frequency range that does not include a primary channel. In addition, to ensure that an RU/MRU misconfiguration does not occur, an index offset is added to a PPDU in a 20 MHz/40 MHz bandwidth to implement an RU/MRU indication.

For example, an MRU/RU index when a bandwidth of an EHT PPDU in an A-PPDU is 20 MHz (MRU/RU Index in A-PPDU if EHT-PPDU BW=20 MHz), and an offset that needs to be added to the obtained RU/MRU index when the bandwidth is 20 MHz are shown in Table 13. For example, for a 26-tone RU, a station can learn an absolute location of an allocated RU/MRU in 80 MHz, for example, first 20 MHz, second 20 MHz, third 20 MHz, or fourth 20 MHz; and may add an offset 0, an offset 9, an offset 19, or an offset 28 based on a physical RU/MRU index mapped in Table 7, to learn a specific 26-tone RU. Further, as shown in Table 13, for a 52-tone RU, the station can learn an absolute location of an allocated RU/MRU in 80 MHz, for example, first 20 MHz, second 20 MHz, third 20 MHz, or fourth 20 MHz; and may add an offset 0, an offset 4, an offset 8, or an offset 12 based on a physical RU/MRU index mapped in Table 7, to learn a specific 52-tone RU.

**Table 13. MRU/RU index when a bandwidth of an EHT PPDU in an A-PPDU is 20 MHz (MRU/RU Index in A-PPDU if EHT-PPDU BW=20 MHz)**

| Absolute location in 80 MHz | 26-tone RU | 52-tone RU | 106-tone RU | 242-tone RU | 52+26-tone MRU | 106+26-tone MRU |
|---|---|---|---|---|---|---|
| 1st 20 MHz | 37*N+RU index+0 | 16*N+RU index+0 | 8*N+RU index+0 | 4*N+RU index+0 | 12*N+RU index+0 | 8*N+RU index+0 |
| 2nd 20 MHz | 37*N+RU index+9 | 16*N+RU index+4 | 8*N+RU index+2 | 4*N+RU index+1 | 12*N+RU index+3 | 8*N+RU index+2 |
| 3rd 20 MHz | 37*N+RU index+19 | 16*N+RU index+8 | 8*N+RU index+4 | 4*N+RU index+2 | 12*N+RU index+6 | 8*N+RU index+4 |
| 4th 20 MHz | 37*N+RU index+28 | 16*N+RU index+12 | 8*N+RU index+6 | 4*N+RU index+3 | 12*N+RU index+9 | 8*N+RU index+6 |

For another example, an MRU/RU index when a bandwidth of an EHT PPDU in an A-PPDU is 40 MHz (MRU/RU Index in A-PPDU if EHT-PPDU BW=40 MHz), and an offset that needs to be added to the obtained RU/MRU index when the bandwidth is 40 MHz are shown in Table 14. For example, for a 26-tone RU, the station can learn an absolute location of an allocated RU/MRU in 80 MHz, for example, first 40 MHz or second 40 MHz, and may add an offset 0 or an offset 19 based on a physical RU/MRU index mapped in Table 7, to learn a specific 26-tone RU. As shown in Table 14, for a 52-tone RU, the station can learn an absolute location of an allocated RU/MRU in 80 MHz, for example, first 40 MHz or second 40 MHz; and may add an offset 0 or an offset 8 based on a physical RU/MRU index mapped in Table 7, to learn a specific 52-tone RU.

**Table 14. MRU/RU index when a bandwidth of an EHT PPDU in an A-PPDU is 40 MHz (MRU/RU Index in A-PPDU if EHT-PPDU BW=40 MHz)**

| Absolute location in 80 MHz | 26 | 52 | 106 | 242 | 484 | 52+26 | 106+26 |
|---|---|---|---|---|---|---|---|
| 1st 40 MHz | 37*N+RU index+0 | 16*N+RU index+0 | 8*N+RU index+0 | 4*N+RU index+0 | 2*N+RU index+0 | 12*N+RU index+0 | 8*N+RU index+0 |

(continued)

| Absolute location in 80 MHz | 26 | 52 | 106 | 242 | 484 | 52+26 | 106+26 |
|---|---|---|---|---|---|---|---|
| 2nd 40 MHz | 37*N+RU index+19 | 16*N+RU index+8 | 8*N+RU index+4 | 4*N+RU index+2 | 2*N+RU index+1 | 12*N+RU index+6 | 8*N+RU index+4 |

4.4. Resource unit allocation method 400

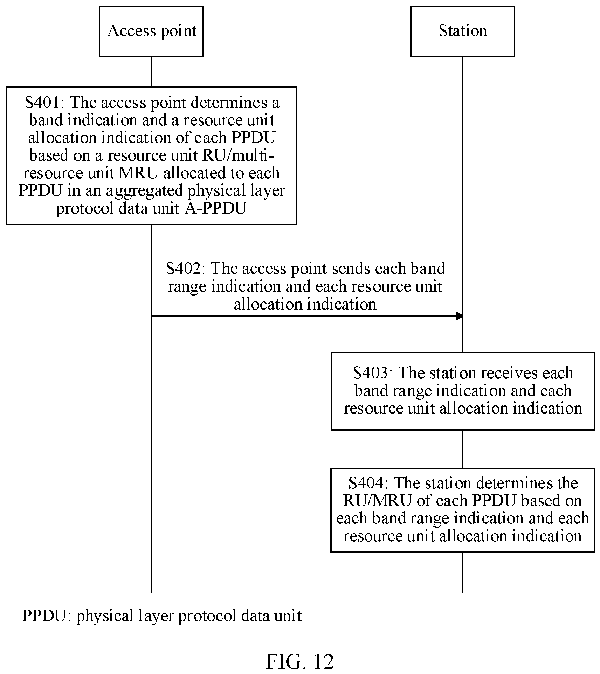

Refer to FIG. 12. FIG. 12 is a schematic flowchart of a resource unit allocation method 400 according to an embodiment of this application. As shown in FIG. 12, the resource unit allocation method 400 may include but is not limited to the following steps.

S401: An access point determines a band indication and a resource unit allocation indication of each PPDU based on a resource unit RU/multi-resource unit MRU allocated to each PPDU in an aggregated physical layer protocol data unit A-PPDU.

The band indication indicates an index of a band of the RU/MRU, and the resource unit allocation indication indicates an RU/MRU index on the band. An index range of the band indication of each PPDU is an index range of the band indication in a bandwidth of the PPDU; and an index range of the resource unit allocation indication of each PPDU is an index range of the resource unit allocation indication in the bandwidth of the PPDU.

It can be learned that, in the resource unit allocation method 400, an RU/MRU index misconfiguration problem is resolved by using a completely independent parameter configuration as a determining input for Table 2. The parameter configuration includes a bandwidth, an RU/MRU index, B0 and PS160, X1 and X0, and N.

When a bandwidth of each PPDU is less than or equal to 160 MHz, there is a set of RU/MRU indexes distributed from a low frequency to a high frequency. Each PPDU has a primary channel (which may also be understood as each temporary primary channel). In this way, for a PPDU in the A-PPDU, in Table 2 and Table 3, that N=2 and that N=3 separately correspond to that N=0 and that N=1. X1=0, and X0 may be equal to 0 or 1. In other words, third 80 MHz or fourth 80 MHz in original secondary 160 MHz may be indicated as that N=0 or N=1. In the foregoing configuration situation, resource unit allocation in the A-PPDU may use respective independent parameters as inputs for Table 3.

S402: The access point sends each band range indication and each resource unit allocation indication.

S403: A station receives each band range indication and each resource unit allocation indication.

S404: The station determines the RU/MRU of each PPDU based on each band range indication and each resource unit allocation indication.

For example, in an EHT PPDU in an A-PPDU shown in FIG. 10, a temporary primary channel is used as a reference for PS160 and B0. If the temporary primary channel is in third 80 MHz of original secondary 160 MHz, that PS160=0 and B0=0 indicates 80 MHz that the temporary primary channel is in, and similarly, that PS160=0 and B0=1 indicates fourth 80 MHz. In an HE PPDU in the A-PPDU shown in FIG. 10, a primary channel is used as a reference for PS160 and B0. Therefore, that PS160=0 and B0=0 indicates 80 MHz that an original primary channel is in, and similarly, that PS 160=0 and B0=1 indicates second 80 MHz.

In addition, mapping relationships of PS160, B0, and B7-B1 shown in Table 2 may remain unchanged. It can be learned that, in the resource unit allocation method 400, an RU/MRU index misconfiguration problem may be resolved by using a completely independent parameter configuration as a determining input for Table 2.

In conclusion, in the resource allocation methods 100 to 200 in this application, values of PS160, B0, X0, and X1 shown in Table 3 (to be specific, limitations, for example, for a bandwidth less than or equal to 80 MHz, PS160, B0, X0, and X1 are all set to 0; and for a 160 MHz bandwidth, PS160 and X1 are both set to 0) are no longer limited; and an index range of B7-B1 when a bandwidth is 80 MHz/160 MHz/320 MHz is reused for an index range of B7-B1 when the bandwidth is 20 MHz/40 MHz, to resolve an RU/MRU index misconfiguration problem. In the resource unit allocation method 300, values of PS160, B0, X0, and X1 shown in Table 3 (to be specific, limitations, for example, for a bandwidth less than or equal to 80 MHz, PS160, B0, X0, and X1 are all set to 0; and for a 160 MHz bandwidth, PS160 and X1 are both set to 0) are no longer limited; and an offset is added to an RU/MRU index of B7-B 1 when a bandwidth is 20 MHz/40 MHz, to resolve an RU/MRU index misconfiguration problem. In the resource unit allocation method 400, an RU/MRU index misconfiguration problem is resolved by using a completely independent parameter configuration as a determining input for Table 2.

Optionally, in this application, in addition to resolving the RU/MRU index misconfiguration problem by using the resource allocation methods described above, there are many other indication methods, there are more scenarios when there are more parameter configurations, and there are various indication methods in different scenarios. In an A-PPDU, determining of an MRU/RU index is related to the following parameters.

1) Bandwidth: The bandwidth may be a bandwidth of a corresponding PPDU, or a bandwidth of the A-PPDU.

2) RU/MRU index: The A-PPDU may use a set of index values, for example, those in the resource unit allocation methods 100 to 300; or each PPDU may correspond to a set of index values, for example, that in the resource unit allocation method 400.

3) B0 and PS160: The A-PPDU may use a set of B0 and PS160, for example, those in the resource unit allocation methods 100 to 300; or each PPDU may correspond to a set of B0 and PS 160, for example, that in the resource unit allocation method 400.

4) X1 and X0: The A-PPDU may use a set of X1 and X0, for example, those in the resource unit allocation methods 100 to 300; or each PPDU may correspond to a set of X1 and X0, for example, that in the resource unit allocation method 400.

5) N: The A-PPDU may use a set of N, for example, those in the resource unit allocation methods 100 to 300; or each PPDU may correspond to a set of N, for example, that in the resource unit allocation method 400.

A change of each of the foregoing configurations may require different solutions to the RU/MRU index misconfiguration problem. For example, PS160 and B0 are still in a previous manner, but X1 and X0 may be independent in each PPDU, and N is independent in each PPDU; or PS160, B0, X1, and X0 are still in a conventional manner, but N is independent in each PPDU. Although configuration manners may be different, the following solutions can be used for resolving.

1) An offset is added during index calculation, for example, an offset may be added at a granularity of a resource unit, or an offset may be added at a granularity of a bandwidth (for example, 20 MHz/40 MHz).

2) An index table corresponding to a BW that actually corresponds to a PPDU (for example, an EHT PPDU in the A-PPDU), for example, an index table corresponding to a larger BW in a conventional manner, is changed (for example, added).

3) PS160, B0, X1, X0, and N after configurations thereof are changed correspond to new equivalent relationships corresponding.

4) The bandwidth of the A-PPDU, instead of a corresponding PPDU, for example, an EHT PPDU, is used as an input for an index.

In an embodiment, some parameters are configured based on a first bandwidth, and other parameters may be independently configured based on a bandwidth of each PPDU. For example, it is assumed that a band configuration is [P80 S80 S160], PS160 and B0 determine an index by using a 320 MHz bandwidth, and each PPDU in the A-PPDU has independent X1, X0, and N. In this case, X1, X0, and N of each PPDU are determined by using a start frequency of the corresponding PPDU as a reference. Enabling parameters to complete logical-to-physical conversion to obtain an RU/MRU in 320 MHz is shown in Table 15. For example, if PS160 B0 are 01, it indicates that the RU/MRU is applied to a S80 channel. If a bandwidth of an EHT TB PPDU is 20 MHz, 40 MHz, or 80 MHz, X1=0, X0=0, and N=0, in other words, the EHT TB PPDU is applied to first 80 MHz on the S80 channel. If the bandwidth of the EHT TB PPDU is 160 MHz/320 MHz, X1=0, X0=1, and N=1, in other words, the EHT TB PPDU is applied to second 80 MHz on a primary 160 MHz channel.

**Table 15. Enable parameters to complete logical-to-physical conversion to obtain an RU/MRU in 320 MHz**

| Logical input (Logical input) | | | Physical output (Physical output) | | | Bandwidth (BW) |
|---|---|---|---|---|---|---|
| Band configuration (Configuration) | PS160 | B0 | X0 | X1 | N | BW |
| [P80 S80 S160] | 0 | 0 | 0 | 0 | 0 | 20/40/80/160/320 |
| | 0 | 1 | 0 | 0 | 0 | 20/40/80 |
| | | | 1 | 0 | 1 | 160/320 |
| | 1 | 0 | 0 | 0 | 0 | 20/40/80/160 |
| | | | 0 | 1 | 2 | 320 |
| | 1 | 1 | 0 | 0 | 0 | 20/40/80 |
| | | | 1 | 0 | 1 | 160 |
| | | | 1 | 1 | 3 | 320 |

Optionally, in this application, PS160 and a resource unit allocation subfield may be used together to indicate each RU/MRU in 320 MHz, to be specific, an index indicated by using nine bits is used in an exhaustive manner, to indicate any RU/MRU in 320 MHz.

In addition, in this application, in addition to a resource allocation method for resolving a resource unit misconfiguration problem in a trigger frame, a resource allocation method for resolving a resource unit misconfiguration problem that may occur in an MU PPDU in an A-PPDU form is further provided. This is because a first RU Allocation subfield on a content channel 1 in the MU PPDU corresponds to 20 MHz of a lowest frequency. However, in the A-PPDU, if a number of RU Allocation subfields is obtained by using an EHT PPDU instead of the A-PPDU as a reference (for example, 160 MHz corresponds to eight RU Allocation subfields), the first RU Allocation subfield on the content channel 1 should correspond to a lowest frequency that the EHT PPDU is at, instead of a lowest frequency of the A-PPDU.

Therefore, to resolve the misconfiguration problem in the situation, this application provides a resource allocation method: adding an offset based on a granularity of an RU. For example, if a bandwidth of an EHT PPDU is 160 MHz and the EHT PPDU is transmitted on third 80 MHz and fourth 80 MHz, when a 2×996-tone RU is allocated to the EHT PPDU, an RU index corresponding to the 2×996-tone RU should be 2 instead of 1, in other words, an offset (namely, 1) of a granularity of the 2×996-tone RU is added based on an RU1.

To resolve the misconfiguration problem in the situation, this application further provides a resource allocation method: adding an offset based on a granularity of 80 MHz. For example, if a bandwidth of an EHT PPDU is 160 MHz and the EHT PPDU is transmitted on third 80 MHz and fourth 80 MHz, a first RU Allocation subfield on a content channel 1 should correspond to ninth 20 MHz. In other words, an offset corresponding to the granularity of 80 MHz is 4, 20 MHz of lowest frequencies of the third 80 MHz and the fourth 80 MHz is that 2*4+1=9, namely, ninth 20 MHz. For another example, if a bandwidth of an EHT PPDU is 80 MHz and the EHT PPDU is transmitted on fourth 80 MHz, a first RU Allocation subfield on a content channel 1 should correspond to thirteenth 20 MHz, in other words, 3*4+1=13.

To resolve the misconfiguration problem in the situation, this application further provides a resource allocation method: For an MU PPDU, each PPDU has an RU/MRU index of the PPDU. In this way, if a number of RU allocation subfields is obtained by using an EHT PPDU as a reference (for example, a 160 MHz bandwidth corresponds to eight RU allocation subfields), for each PPDU, a first RU allocation subfield on a content channel 1 corresponds to lowest 20 MHz that the EHT PPDU is in. For example, if a bandwidth of an HE PPDU is 160 MHz and the HE PPDU is transmitted on first 80 MHz and second 80 MHz; and a bandwidth of an EHT PPDU is 160 MHz and the EHT PPDU is transmitted on third 80 MHz and fourth 80 MHz, a first RU Allocation subfield on a content channel 1 of the HE PPDU should correspond to first 20 MHz, and a first RU Allocation subfield on a content channel 1 of the EHT PPDU corresponds to ninth 20 MHz.

An A-PPDU in 320 MHz may correspond to 16 RU Allocation subfields (320/20=16), or it may be calculated that the A-PPDU corresponds to 8 RU Allocation subfields (160/20=8) only based on a bandwidth of each PPDU (if the bandwidth of the PPDU is 160 MHz). A form of obtaining the number of RU Allocation subfields in the A-PPDU is not limited in this application. The number of RU Allocation subfields in the A-PPDU may correspond to the first bandwidth, or may correspond to a bandwidth of a PPDU in the A-PPDU. It can be learned that, the resource allocation method provided for the MU PPDU in this application resolves a misconfiguration problem of an RU Allocation subfield when the number of RU Allocation subfields is determined by using the bandwidth of each PPDU.

Corresponding to the methods provided in the foregoing method embodiments, embodiments of this application further provide a corresponding apparatus. The apparatus includes a corresponding module configured to perform the foregoing embodiments. The module may be software, hardware, or a combination of software and hardware.

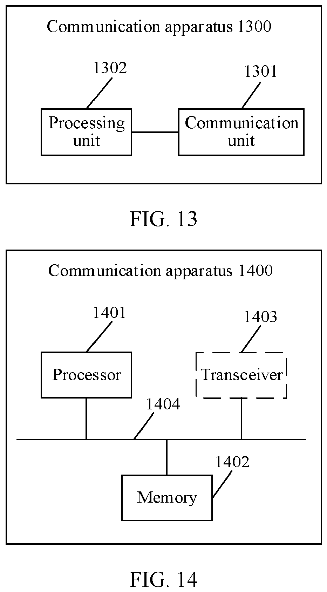

Refer to FIG. 13. FIG. 13 is a schematic diagram of a structure of a communication apparatus according to this application. A communication apparatus 1300 shown in FIG. 13 includes a communication unit 1301 and a processing unit 1302.

In an implementation, the communication apparatus 1300 is a transmit end, to implement a function of the access point in embodiments shown in the resource allocation method 100. An example is as follows.

The processing unit 1302 is configured to determine a band indication and a resource unit allocation indication based on a resource unit RU/multi-resource unit MRU allocated to a physical layer protocol data unit PPDU, where

the band indication indicates an index of a band of the RU/MRU, and an index range corresponding to the band indication in a first bandwidth is reused for an index range of the band indication;
the resource unit allocation indication indicates an RU/MRU index of the RU/MRU on the band, and an index range corresponding to the resource unit allocation indication in the first bandwidth is reused for an index range of the resource unit allocation indication; and
the first bandwidth is greater than a bandwidth of the PPDU.

The communication unit 1301 is configured to send the band indication and the resource unit allocation indication.

In another implementation, the communication apparatus 1300 is a transmit end, to implement a function of the access point in embodiments shown in the resource allocation method 200. An example is as follows.

The processing unit 1302 is configured to determine a band indication and a resource unit allocation indication based on a resource unit RU/multi-resource unit MRU allocated to a physical layer protocol data unit PPDU, where

the band indication indicates an index of a band of the RU/MRU, and an index range corresponding to the band indication in a 320 MHz bandwidth is reused for an index range of the band indication; and

the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication.

The communication unit 1301 is configured to send the band indication and the resource unit allocation indication.

In another implementation, the communication apparatus 1300 is a transmit end, to implement a function of the access point in embodiments shown in the resource allocation method 300.

In still another implementation, the communication apparatus 1300 is a transmit end, to implement a function of the access point in embodiments shown in the resource allocation method 400. An example is as follows.

The processing unit 1302 is configured to determine a band indication and a resource unit allocation indication of each PPDU based on a resource unit RU/multi-resource unit MRU allocated to each PPDU in an aggregated physical layer protocol data unit A-PPDU, where

the band indication indicates an index of a band of the RU/MRU;

the resource unit allocation indication indicates an RU/MRU index of the RU/MRU on the band;

an index range of the band indication of each PPDU is an index range of the band indication in a bandwidth of the PPDU; and

an index range of the resource unit allocation indication of each PPDU is an index range of the resource unit allocation indication in the bandwidth of the PPDU.

The communication unit 1301 is configured to send each band range indication and each resource unit allocation indication.

In an implementation, the communication apparatus 1300 is a receive end, to implement a function of the station in embodiments shown in the resource allocation method 100. An example is as follows.

The communication unit 1301 is configured to receive a band indication and a resource unit allocation indication, where

the band indication indicates an index of a band of an RU/MRU, and an index range corresponding to the band indication in a first bandwidth is reused for an index range of the band indication; and

the resource unit allocation indication indicates an RU/MRU index of the RU/MRU on the band, and an index range corresponding to the resource unit allocation indication in the first bandwidth is reused for an index range of the resource unit allocation indication.

The processing unit 1302 is configured to determine the band corresponding to the index indicated by the band indication, and determine the RU/MRU corresponding to the RU/MRU index indicated by the resource unit allocation indication on the band.

In another implementation, the communication apparatus 1300 is a receive end, to implement a function of the station in embodiments shown in the resource allocation method 200. An example is as follows.

The communication unit 1301 is configured to receive a band indication and a resource unit allocation indication, where

the band indication indicates an index of a band of an RU/MRU, and an index range corresponding to the band indication in a 320 MHz bandwidth is reused for an index range corresponding to the band indication in a bandwidth of a PPDU; and

the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication.

The processing unit 1302 is configured to determine the band corresponding to the index indicated by the band indication, and determine the RU/MRU corresponding to the RU/MRU index indicated by the resource unit allocation indication on the band.

In another implementation, the communication apparatus 1300 is a receive end, to implement a function of the station in embodiments shown in the resource allocation method 300.

In still another implementation, the communication apparatus 1300 is a receive end, to implement a function of the station in embodiments shown in the resource allocation method 400. An example is as follows.

The communication unit 1301 is configured to receive a band indication and a resource unit allocation indication of each PPDU in an aggregated physical layer protocol data unit A-PPDU, where

the band indication indicates an index of a band of an RU/MRU;

the resource unit allocation indication indicates an RU/MRU index of the RU/MRU on the band;

an index range of the band indication of each PPDU is an index range of the band indication in a bandwidth of the PPDU; and

an index range of the resource unit allocation indication of each PPDU is an index range of the resource unit allocation indication in the bandwidth of the PPDU.

The processing unit 1302 is configured to: for each PPDU, determine the band corresponding to the index indicated by the corresponding band indication, and determine the RU/MRU corresponding to the RU/MRU index indicated by the corresponding resource unit allocation indication on the band.

Optionally, the communication apparatus may further perform related implementations in the foregoing method embodiments. Details are not described herein again.

Refer to FIG. 14. FIG. 14 is a schematic diagram of a structure of another communication apparatus according to this application. A communication apparatus 1400 shown in FIG. 14 includes at least one processor 1401 and a memory 1402, and optionally, may further include a transceiver 1403. In embodiments of this application, a specific connection medium between the processor 1401 and the memory 1402 is not limited. In FIG. 14, an example in which the memory 1402 and the processor 1401 are connected through a bus 1404 is used. The bus 1404 is represented by using a bold line in the figure. A manner of connection between other components is merely an example for description, and is not limited thereto. The bus 1404 may be classified as an address bus, a data bus, a control bus, or the like. For ease of indication, the bus is indicated by using only one thick line in FIG. 14. However, this does not indicate that there is only one bus or only one type of bus.

The processor 1401 may have a data transceiver function, and can communicate with another device. In the apparatus shown in FIG. 14, an independent data transceiver module, for example, the transceiver 1403, may also be disposed, to receive and send data. When communicating with another device, the processor 1401 may transmit data by using the transceiver 1403.

In an example, when a transmit end uses a form shown in FIG. 14, the processor 1401 in FIG. 14 may invoke computer-executable instructions stored in the memory 1402, to enable the transmit end to perform the method performed by the access point in any embodiment of the foregoing resource allocation methods.

In an example, when a receive end uses a form shown in FIG. 14, the processor 1401 in FIG. 14 may invoke computer-executable instructions stored in the memory 1402, to enable the receive end to perform the method performed by the station in any embodiment of the foregoing resource allocation methods.

Specifically, functions/implementation processes of the processing module and the transceiver module in FIG. 14 may be implemented by the processor 1401 in FIG. 14 by invoking the computer-executable instructions stored in the memory 1402. Alternatively, functions/implementation processes of the processing unit in FIG. 13 may be implemented by the processor 1401 in FIG. 14 by invoking the computer-executable instructions stored in the memory 1402, and functions/implementation processes of the communication unit in FIG. 13 may be implemented by the transceiver 1403 in FIG. 14.

The solutions described in this application may be implemented in various manners. For example, the technologies may be implemented by hardware, software, or a combination thereof. For hardware implementation, a processing unit configured to execute the technologies at a communication apparatus (for example, a base station, a terminal, a network entity, a core network element, or a chip) may be implemented in one or more general-purpose processors, digital signal processors (digital signal processor, DSP), digital signal processor components, or application-specific integrated circuits (application-specific integrated circuit, ASIC), programmable logic devices, field programmable gate arrays (field programmable gate array, FPGA), or other programmable logic apparatuses, discrete gate or transistor logic, discrete hardware components, or any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer-readable storage medium. The computer-readable storage medium stores a computer program. When the computer program is executed by a computer, a function in any one of the foregoing method embodiments is implemented.

This application further provides a computer program product. When the computer program product is executed by a computer, functions of any one of the foregoing method embodiments are implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid state disk, SSD)), or the like.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, the apparatus provided in embodiments of this application may also correspondingly implement these features or functions. Details are not described herein.

A person skilled in the art may further understand that various illustrative logical blocks (illustrative logical blocks) and steps (steps) that are listed in embodiments of this application may be implemented by electronic hardware, computer software, or a combination thereof. Whether the functions are implemented by using hardware or software depends on particular applications and a design requirement of the entire system. A person skilled in the art may use various methods to implement the functions for corresponding application, but it should not be considered that the implementation goes beyond the protection scope of embodiments of this application.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" may be used interchangeably in this specification. The term "and/or" in this specification describes only an association relationship between associated objects and represents that three relationships may exist. For example, A and/or B may represent the following three cases: only A exists, both A and B exist, and only B exists. A may be singular or plural, and B may be singular or plural.

"Predefine" in this application may be understood as "define", "predefine", "store", "pre-store", "pre-negotiate", "pre-configure", "solidify", or "pre-burn".

A person of ordinary skill in the art may understand that, for the purpose of convenient and brief description, for a detailed working process of the foregoing system, apparatuses, and units, refer to a corresponding process in the foregoing method embodiments. Details are not described herein again.

For same or similar parts in embodiments of this application, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The foregoing descriptions are implementations of this application, but are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A resource allocation method, wherein the method is applied to a transmit end, and the method comprises:

    determining a band indication and a resource unit allocation indication based on a resource unit RU/multi-resource unit MRU allocated to a physical layer protocol data unit PPDU, wherein
    the band indication indicates an index of a band of the RU/MRU, and an index range corresponding to the band indication in a first bandwidth is reused for an index range of the band indication;
    the resource unit allocation indication indicates an RU/MRU index of the RU/MRU on the band, and an index range corresponding to the resource unit allocation indication in the first bandwidth is reused for an index range of the resource unit allocation indication; and
    the first bandwidth is greater than a bandwidth of the PPDU; and
    sending the band indication and the resource unit allocation indication.

2. The method according to claim 1, wherein the first bandwidth is 320 MHz.

3. The method according to claim 1, wherein the first bandwidth is 160 MHz.

4. The method according to claim 2 or 3, wherein
the PPDU is a PPDU in an aggregated physical layer protocol data unit A-PPDU.

5. The method according to claim 1, wherein
the PPDU is a PPDU in an aggregated physical layer protocol data unit A-PPDU, the A-PPDU has a corresponding bandwidth indication, and the first bandwidth is a bandwidth of the A-PPDU.

6. The method according to any one of claims 1 to 5, wherein

    the band indication is formed by a primary-secondary 160 (PS160) subfield and a bit B0 of a resource unit allocation subfield in a trigger frame; and
    the resource unit allocation indication is formed by bits B7-B1 of the resource unit allocation subfield.

7. The method according to claim 6, wherein

    when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
    when the RU is a 2×996-tone RU, or the MRU is a 996+484-tone MRU or a 996+484+242-tone MRU, the PS160 subfield indicates which 160 MHz the RU/MRU is in.

8. The method according to any one of claims 1 to 7, wherein
when the bandwidth of the PPDU is 20 MHz and the resource unit is a 242-tone RU, the 242-tone RU is a non-orthogonal frequency division multiple access non-OFDMA 242-tone RU.

9. The method according to any one of claims 1 to 5, wherein
when the bandwidth of the PPDU is 80 HMz, 160 MHz, or 320 MHz, each 20 MHz supports various 52+26-tone MRUs and various 106+26-tone MRUs.

10. A resource allocation method, wherein the method is applied to a receive end, and the method comprises:

receiving a band indication and a resource unit allocation indication, wherein
the band indication indicates an index of a band of an RU/MRU, and an index range corresponding to the band indication in a first bandwidth is reused for an index range of the band indication; and
the resource unit allocation indication indicates an RU/MRU index of the RU/MRU on the band, and an index range corresponding to the resource unit allocation indication in the first bandwidth is reused for an index range of the resource unit allocation indication; and
determining the band corresponding to the index indicated by the band indication, and determining the RU/MRU corresponding to the RU/MRU index indicated by the resource unit allocation indication on the band.

11. The method according to claim 10, wherein the first bandwidth is 320 MHz.

12. The method according to claim 10, wherein the first bandwidth is 160 MHz.

13. The method according to claim 11 or 12, wherein
the PPDU is a PPDU in an aggregated physical layer protocol data unit A-PPDU.

14. The method according to claim 10, wherein
the PPDU is a PPDU in an aggregated physical layer protocol data unit A-PPDU, the A-PPDU has a corresponding bandwidth indication, and the first bandwidth is a bandwidth of the A-PPDU.

15. The method according to any one of claims 10 to 14, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

16. The method according to claim 15, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
when the RU is a 2×996-tone RU, or the MRU is a 996+484-tone MRU or a 996+484+242-tone MRU, the PS160 subfield indicates which 160 MHz the RU/MRU is in.

17. The method according to any one of claims 10 to 16, wherein
when the bandwidth of the PPDU is 20 MHz and the resource unit is a 242-tone RU, the 242-tone RU is a non-orthogonal frequency division multiple access non-OFDMA 242-tone RU.

18. The method according to any one of claims 10 to 14, wherein
when the bandwidth of the PPDU is 80 HMz, 160 MHz, or 320 MHz, each 20 MHz supports various 52+26-tone MRUs and various 106+26-tone MRUs.

19. A resource allocation method, wherein the method is applied to a transmit end, and the method comprises:

determining a band indication and a resource unit allocation indication based on a resource unit RU/multi-resource unit MRU allocated to a physical layer protocol data unit PPDU, wherein
the band indication indicates an index of a band of the RU/MRU, and an index range corresponding to the band indication in a 320 MHz bandwidth is reused for an index range of the band indication; and

the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication; and

sending the band indication and the resource unit allocation indication.

20. The method according to claim 19, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

21. The method according to claim 20, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
when the RU is a 2×996-tone RU, or the MRU is a 996+484-tone MRU or a 996+484+242-tone MRU, the PS160 subfield indicates which 160 MHz the RU/MRU is in.

22. The method according to any one of claims 19 to 21, wherein
when the bandwidth of the PPDU is 20 MHz and the resource unit is a 242-tone RU, the 242-tone RU is a non-OFDMA 242-tone RU.

23. The method according to any one of claims 19 to 22, wherein
when the bandwidth of the PPDU is 80 HMz, 160 MHz, or 320 MHz, each 20 MHz supports various 52+26-tone MRUs and various 106+26-tone MRUs.

24. A resource allocation method, wherein the method is applied to a receive end, and the method comprises:

receiving a band indication and a resource unit allocation indication, wherein
the band indication indicates an index of a band of an RU/MRU, and an index range corresponding to the band indication in a 320 MHz bandwidth is reused for an index range corresponding to the band indication in a bandwidth of a PPDU; and
the resource unit allocation indication indicates an RU/MRU index corresponding to the RU/MRU on the band, and when the bandwidth of the PPDU is less than or equal to 80 MHz, an index range corresponding to the resource unit allocation indication in an 80 MHz bandwidth is reused for an index range of the resource unit allocation indication; and
determining the band corresponding to the index indicated by the band indication, and determining the RU/MRU corresponding to the RU/MRU index indicated by the resource unit allocation indication on the band.

25. The method according to claim 24, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

26. The method according to claim 25, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS 160 subfield and B0 indicate which 80 MHz the RU/MRU is in; and/or
when the RU is a 2×996-tone RU, or the MRU is a 996+484-tone MRU or a 996+484+242-tone MRU, the PS 160 subfield indicates which 160 MHz the RU/MRU is in.

27. The method according to any one of claims 24 to 26, wherein
when the bandwidth of the PPDU is 20 MHz and the resource unit is a 242-tone RU, the 242-tone RU is a non-OFDMA 242-tone RU.

28. The method according to any one of claims 24 to 27, wherein
when the bandwidth of the PPDU is 80 HMz, 160 MHz, or 320 MHz, each 20 MHz supports various 52+26-tone MRUs and various 106+26-tone MRUs.

29. A resource allocation method, wherein the method is applied to a transmit end, and the method comprises:

determining a band indication and a resource unit allocation indication of each PPDU based on a resource unit RU/multi-resource unit MRU allocated to each PPDU in an aggregated physical layer protocol data unit A-PPDU, wherein
the band indication indicates an index of a band of the RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
sending each band range indication and each resource unit allocation indication.

30. A resource allocation method, wherein the method is applied to a receive end, and the method comprises:

receiving a band indication and a resource unit allocation indication of each PPDU in an aggregated physical layer protocol data unit A-PPDU, wherein
the band indication indicates an index of a band of an RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
for each PPDU, determining the band corresponding to the index indicated by the corresponding band indication, and determining the RU/MRU corresponding to the RU/MRU index indicated by the corresponding resource unit allocation indication on the band.

31. A communication apparatus, wherein the apparatus comprises:

a processing unit, configured to determine a band indication and a resource unit allocation indication based on a resource unit RU/multi-resource unit MRU allocated to a physical layer protocol data unit PPDU, wherein
the band indication indicates an index of a band of the RU/MRU, and an index range corresponding to the band indication in a first bandwidth is reused for an index range of the band indication;
the resource unit allocation indication indicates an RU/MRU index of the RU/MRU on the band, and an index range corresponding to the resource unit allocation indication in the first bandwidth is reused for an index range of the resource unit allocation indication; and
the first bandwidth is greater than a bandwidth of the PPDU; and
a communication unit, configured to send the band indication and the resource unit allocation indication.

32. The apparatus according to claim 31, wherein the first bandwidth is 320 MHz.

33. The apparatus according to claim 31, wherein the first bandwidth is 160 MHz.

34. The apparatus according to claim 32 or 33, wherein
the PPDU is a PPDU in an aggregated physical layer protocol data unit A-PPDU.

35. The apparatus according to claim 31, wherein
the PPDU is a PPDU in an aggregated physical layer protocol data unit A-PPDU, the A-PPDU has a corresponding bandwidth indication, and the first bandwidth is a bandwidth of the A-PPDU.

36. The apparatus according to any one of claims 31 to 35, wherein

the band indication is formed by a primary-secondary 160 (PS160) subfield and a bit B0 of a resource unit allocation subfield in a trigger frame; and

44

the resource unit allocation indication is formed by bits B7-B1 of the resource unit allocation subfield.

37. The apparatus according to claim 36, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
when the RU is a 2×996-tone RU, or the MRU is a 996+484-tone MRU or a 996+484+242-tone MRU, the PS160 subfield indicates which 160 MHz the RU/MRU is in.

38. The apparatus according to any one of claims 31 to 37, wherein
when the bandwidth of the PPDU is 20 MHz and the resource unit is a 242-tone RU, the 242-tone RU is a non-orthogonal frequency division multiple access non-OFDMA 242-tone RU.

39. The apparatus according to any one of claims 31 to 35, wherein
when the bandwidth of the PPDU is 80 HMz, 160 MHz, or 320 MHz, each 20 MHz supports various 52+26-tone MRUs and various 106+26-tone MRUs.

40. A communication apparatus, wherein the apparatus comprises:

a communication unit, configured to receive a band indication and a resource unit allocation indication, wherein the band indication indicates an index of a band of an RU/MRU, and an index range corresponding to the band indication in a first bandwidth is reused for an index range of the band indication; and
the resource unit allocation indication indicates an RU/MRU index of the RU/MRU on the band, and an index range corresponding to the resource unit allocation indication in the first bandwidth is reused for an index range of the resource unit allocation indication; and
a processing unit, configured to determine the band corresponding to the index indicated by the band indication, and determine the RU/MRU corresponding to the RU/MRU index indicated by the resource unit allocation indication on the band.

41. The apparatus according to claim 40, wherein the first bandwidth is 320 MHz.

42. The apparatus according to claim 40, wherein the first bandwidth is 160 MHz.

43. The apparatus according to claim 41 or 42, wherein
the PPDU is a PPDU in an aggregated physical layer protocol data unit A-PPDU.

44. The apparatus according to claim 40, wherein
the PPDU is a PPDU in an aggregated physical layer protocol data unit A-PPDU, the A-PPDU has a corresponding bandwidth indication, and the first bandwidth is a bandwidth of the A-PPDU.

45. The apparatus according to any one of claims 40 to 44, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

46. The apparatus according to claim 45, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
when the RU is a 2×996-tone RU, or the MRU is a 996+484-tone MRU or a 996+484+242-tone MRU, the PS160 subfield indicates which 160 MHz the RU/MRU is in.

47. The apparatus according to any one of claims 40 to 46, wherein
when the bandwidth of the PPDU is 20 MHz and the resource unit is a 242-tone RU, the 242-tone RU is a non-orthogonal frequency division multiple access non-OFDMA 242-tone RU.

48. The apparatus according to any one of claims 40 to 44, wherein
when the bandwidth of the PPDU is 80 HMz, 160 MHz, or 320 MHz, each 20 MHz supports various 52+26-tone MRUs and various 106+26-tone MRUs.

49. A communication apparatus, wherein the apparatus comprises:

a processing unit, configured to determine a band indication and a resource unit allocation indication based on a resource unit RU/multi-resource unit MRU allocated to a physical layer protocol data unit PPDU, wherein the band indication indicates an index of a band of the RU/MRU, and an index range corresponding to the band indication in a 320 MHz bandwidth is reused for an index range of the band indication; and
the resource unit allocation indication indicates an RU/MRU index corresponding to the RU/MRU on the band, and when a bandwidth of the PPDU is less than or equal to 80 MHz, an index range corresponding to the resource unit allocation indication in an 80 MHz bandwidth is reused for an index range of the resource unit allocation indication; and
a communication unit, configured to send the band indication and the resource unit allocation indication.

50. The apparatus according to claim 49, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

51. The apparatus according to claim 50, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS160 subfield and B0 indicate which 80 MHz the RU/MRU is in; and/or
when the RU is a $2\times996$-tone RU, or the MRU is a 996+484-tone MRU or a 996+484+242-tone MRU, the PS160 subfield indicates which 160 MHz the RU/MRU is in.

52. The apparatus according to any one of claims 49 to 51, wherein
when the bandwidth of the PPDU is 20 MHz and the resource unit is a 242-tone RU, the 242-tone RU is a non-OFDMA 242-tone RU.

53. The apparatus according to any one of claims 49 to 52, wherein
when the bandwidth of the PPDU is 80 HMz, 160 MHz, or 320 MHz, each 20 MHz supports various 52+26-tone MRUs and various 106+26-tone MRUs.

54. A communication apparatus, wherein the apparatus comprises:

a communication unit, configured to receive a band indication and a resource unit allocation indication, wherein the band indication indicates an index of a band of an RU/MRU, and an index range corresponding to the band indication in a 320 MHz bandwidth is reused for an index range corresponding to the band indication in a bandwidth of a PPDU; and
the resource unit allocation indication indicates an RU/MRU index corresponding to the RU/MRU on the band, and when the bandwidth of the PPDU is less than or equal to 80 MHz, an index range corresponding to the resource unit allocation indication in an 80 MHz bandwidth is reused for an index range of the resource unit allocation indication; and
a processing unit, configured to determine the band corresponding to the index indicated by the band indication, and determine the RU/MRU corresponding to the RU/MRU index indicated by the resource unit allocation indication on the band.

55. The apparatus according to claim 54, wherein

the band indication is formed by a primary-secondary 160 (PS160) subfield and a bit B0 of a resource unit allocation subfield in a trigger frame; and
the resource unit allocation indication is formed by bits B7-B1 of the resource unit allocation subfield.

**56.** The apparatus according to claim 55, wherein

when the RU is a 26-tone RU, a 52-tone RU, a 106-tone RU, a 242-tone RU, a 484-tone RU, or a 996-tone RU, or the MRU is a 52+26-tone MRU, a 106+26-tone MRU, or a 484+242-tone MRU, the PS 160 subfield and B0 indicate which 80 MHz the RU/MRU is in; and/or
when the RU is a 2×996-tone RU, or the MRU is a 996+484-tone MRU or a 996+484+242-tone MRU, the PS 160 subfield indicates which 160 MHz the RU/MRU is in.

**57.** The apparatus according to any one of claims 54 to 56, wherein
when the bandwidth of the PPDU is 20 MHz and the resource unit is a 242-tone RU, the 242-tone RU is a non-OFDMA 242-tone RU.

**58.** The apparatus according to any one of claims 54 to 57, wherein
when the bandwidth of the PPDU is 80 HMz, 160 MHz, or 320 MHz, each 20 MHz supports various 52+26-tone MRUs and various 106+26-tone MRUs.

**59.** A communication apparatus, wherein the apparatus comprises:

a processing unit, configured to determine a band indication and a resource unit allocation indication of each PPDU based on a resource unit RU/multi-resource unit MRU allocated to each PPDU in an aggregated physical layer protocol data unit A-PPDU, wherein
the band indication indicates an index of a band of the RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
a communication unit, configured to send each band range indication and each resource unit allocation indication.

**60.** A communication apparatus, wherein the apparatus comprises:

a communication unit, configured to receive a band indication and a resource unit allocation indication of each PPDU in an aggregated physical layer protocol data unit A-PPDU, wherein
the band indication indicates an index of a band of an RU/MRU;
the resource unit allocation indication indicates an RU/MRU index of the RU/MRU on the band;
an index range of the band indication of each PPDU is an index range of the band indication in a bandwidth of the PPDU; and
an index range of the resource unit allocation indication of each PPDU is an index range of the resource unit allocation indication in the bandwidth of the PPDU; and
a processing unit, configured to: for each PPDU, determine the band corresponding to the index indicated by the corresponding band indication, and determine the RU/MRU corresponding to the RU/MRU index indicated by the corresponding resource unit allocation indication on the band.

**61.** A communication apparatus, comprising:
an interface and a processing circuit, wherein the interface is coupled to the processing circuit, the interface is configured to communicate with another communication apparatus, and the processing circuit is configured to run a program, to enable a multi-link device to implement the method according to claim 1 or any one of claims 3 to 10, or the method according to any one of claims 2 to 10, or the method according to claim 11 or any one of claims 13 to 16, or the method according to any one of claims 12 to 16, or the method according to claim 17, or the method according to claim 18.

**62.** A computer-readable storage medium, wherein the computer-readable storage medium stores a computer program, and the computer program is capable of being executed by a computer to control the computer to perform the method according to claim 1 or any one of claims 3 to 10, or the method according to any one of claims 2 to 10, or the method according to claim 11 or any one of claims 13 to 16, or the method according to any one of claims 12 to 16, or the method according to claim 17, or the method according to claim 18.

**63.** A computer program product, comprising a computer program, wherein when the computer program is run on a computer, the computer is enabled to perform the method according to claim 1 or any one of claims 3 to 10, or the method according to any one of claims 2 to 10, or the method according to claim 11 or any one of claims 13 to 16, or the method according to any one of claims 12 to 16, or the method according to claim 17, or the method according to claim 18.

64. A communication apparatus, configured to perform the method according to claim 1 or any one of claims 3 to 10, or the method according to any one of claims 2 to 10, or the method according to claim 11 or any one of claims 13 to 16, or the method according to any one of claims 12 to 16, or the method according to claim 17, or the method according to claim 18.

FIG. 1

| | |
|---|---|
| | Channel 16 |
| | Channel 15 |
| | Channel 14 |
| Secondary 160 MHz channel | Channel 13 |
| | Channel 12 |
| | Channel 11 |
| | Channel 10 |
| | Channel 9 |
| | Channel 8 |
| Secondary 80 MHz channel | Channel 7 |
| | Channel 6 |
| | Channel 5 |
| Secondary 40 MHz channel | Channel 4 |
| | Channel 3 |
| Secondary 20 MHz channel | Channel 2 |
| Primary 20 MHz channel | Channel 1 |

Primary 40 MHz channel

Primary 80 MHz channel

Primary 160 MHz channel

FIG. 2

|                              | Channel 16 |
|------------------------------|-----------|
|                              | Channel 15 |
|                              | Channel 14 |
| Secondary 160 MHz channel    | Channel 13 |
|                              | Channel 12 |
|                              | Channel 11 |
|                              | Channel 10 |
|                              | Channel 9 |
| Secondary 40 MHz channel     | Channel 8 |
|                              | Channel 7 |
| Secondary 20 MHz channel     | Channel 6 |
| Primary 20 MHz channel       | Channel 5 |
|                              | Channel 4 |
| Secondary 80 MHz channel     | Channel 3 |
|                              | Channel 2 |
|                              | Channel 1 |

Primary 40 MHz channel (Channel 5, Channel 6)

Primary 80 MHz channel

Primary 160 MHz channel

FIG. 3

| | Channel 16 | |
|---|---|---|
| Secondary 80 MHz channel | Channel 15 | |
| | Channel 14 | |
| | Channel 13 | |

Secondary 40 MHz channel: Channel 12, Channel 11

Secondary 20 MHz channel: Channel 10

Primary 20 MHz channel: Channel 9

Primary 40 MHz channel (Channels 9–10)

Primary 80 MHz channel

Primary 160 MHz channel

| | Channel 8 |
|---|---|
| | Channel 7 |
| | Channel 6 |
| | Channel 5 |
| Secondary 160 MHz channel | Channel 4 |
| | Channel 3 |
| | Channel 2 |
| | Channel 1 |

FIG. 4

Secondary 40 MHz channel { Channel 16
Channel 15

Secondary 20 MHz channel — Channel 14
Primary 20 MHz channel — Channel 13

Primary 40 MHz channel

Primary 80 MHz channel

Primary 160 MHz channel

Secondary 80 MHz channel {
Channel 12
Channel 11
Channel 10
Channel 9

Secondary 160 MHz channel {
Channel 8
Channel 7
Channel 6
Channel 5
Channel 4
Channel 3
Channel 2
Channel 1

FIG. 5

FIG. 6

FIG. 7

**Common information field**

| Trigger frame type (Trigger Type) | Uplink length (UL Length) | More trigger frames (More TFs) | Carrier sense required (CS Required) | Uplink bandwidth (UL Bandwidth) | Guard interval+HE-long training sequence type (GI And HE-LTF Type) | MU-MIMO HE-LTF mode (MU-MIMO HE-LTF Mode) | Number of HE-LTF Symbols And Midamble Periodicity (Number of HE-LTF Symbols And Midamble Periodicity) | Uplink space time block coding (UL STBC) |
|---|---|---|---|---|---|---|---|---|

**User information list field**

| User information (User Info) (STA 1) | ... | User Info (STA M) |
|---|---|---|

| LDPC extra symbol segment (LDPC Extra Symbol Segment) | AP transmit power (AP TX Power) | Pre-forward error correction padding factor (Pre-FEC Padding Factor) | Packet extension disambiguity (PE Disambiguity) | Uplink spatial reuse (UL Spatial Reuse) | Doppler (Doppler) | Uplink HE-SIG-A2 reserved (UL HE-SIG-A2 Reserved) | Reserved (Reserved) | Trigger frame-based common information (Trigger Dependent Common Info) |
|---|---|---|---|---|---|---|---|---|

| Association identifier (AID12) | Resource unit allocation (RU Allocation) | Uplink forward error correction coding type (UL FEC Coding Type) | Uplink modulation and coding scheme (UL HE-MCS) | Uplink dual carrier modulation (UL DCM) | Space stream allocation/random access RU information (SS Allocation/RA-RU Information) | Uplink target receive signal strength indication (UL Target RSSI) | Reserved (Reserved) | Trigger frame-based station information (Trigger Dependent User Info) |
|---|---|---|---|---|---|---|---|---|

FIG. 8

EP 4 333 528 A1

| Trigger frame type (Trigger Type) | Uplink length (UL Length) | More trigger frames (More TFs) | Carrier sense required (CS Required) | Uplink bandwidth (UL BW) | Guard interval+HE-long training sequence type (GI And HE-LTF Type) | MU-MIMO HE-LTF mode (MU-MIMO HE-LTF Mode) | Number of EHT-LTF Symbols And Midamble Periodicity (Number of EHT-LTF Symbols And Midamble Periodicity) |
|---|---|---|---|---|---|---|---|

| Uplink space time block coding (UL STBC) | LDPC extra symbol segment (LDPC Extra Symbol Segment) | AP transmit power (AP TX Power) | Pre-forward error correction padding factor (Pre-FEC Padding Factor) | Packet extension disambigulty (PE Disambigulty) | Uplink spatial reuse (UL Spatial Reuse) | Doppler (Doppler) | HE/EHT P160 subfield | Special user information field present (Special User Info Field Present) |
|---|---|---|---|---|---|---|---|---|

| Reserved (Reserved) | Reserved (Reserved) | Trigger frame-based common information (Trigger Dependent Common Info) |
|---|---|---|

FIG. 9a

| Association identifier (AID12) | Resource unit allocation (RU Allocation) | Uplink forward error correction coding type (UL FEC Coding Type) | Uplink EHT-modulation and coding scheme (UL HE-MCS) | Reserved (Reserved) | Space flow allocation/ random access RU information (SS Allocation/ RA-RU Information) | Uplink target receive signal strength indication (UL Target Receive Power) | PS160 | Trigger frame-based station information (Trigger Dependent User Info) |

FIG. 9b

```
                  ┌──────────────┐
                  │   EHT PPDU   │   Secondary 160 MHz
         A-PPDU ──┤├─────────────┤
                  │   HE PPDU    │   Primary 160 MHz
                  └──────────────┘
```

FIG. 10

```
   ┌──────────────┐                          ┌──────────────┐
   │ Access point │                          │   Station    │
   └──────┬───────┘                          └──────┬───────┘
          │                                         │
 ┌────────┴──────────────────┐                      │
 │ S101: The access point    │                      │
 │ determines a band         │                      │
 │ indication and a resource │                      │
 │ unit allocation indication│                      │
 │ based on an RU/MRU        │                      │
 │ allocated to a PPDU       │                      │
 └────────┬──────────────────┘                      │
          │  S102: The access point sends the band  │
          │  indication and the resource unit       │
          │  allocation indication                  │
          │────────────────────────────────────────▶│
          │                          ┌───────────────┴──────────┐
          │                          │ S103: The station        │
          │                          │ receives the band        │
          │                          │ indication and the       │
          │                          │ resource unit allocation │
          │                          │ indication               │
          │                          └───────────────┬──────────┘
          │                          ┌───────────────┴──────────┐
          │                          │ S104: The station        │
          │                          │ determines the allocated │
          │                          │ RU/MRU based on the band │
          │                          │ indication and the       │
          │                          │ resource unit allocation │
          │                          │ indication               │
          │                          └───────────────┬──────────┘
          │                                         │
```

PPDU: physical layer protocol data unit
RU: resource unit
MRU: multi-resource unit

FIG. 11

Access point

Station

S401: The access point determines a band indication and a resource unit allocation indication of each PPDU based on a resource unit RU/multi-resource unit MRU allocated to each PPDU in an aggregated physical layer protocol data unit A-PPDU

S402: The access point sends each band range indication and each resource unit allocation indication

S403: The station receives each band range indication and each resource unit allocation indication

S404: The station determines the RU/MRU of each PPDU based on each band range indication and each resource unit allocation indication

PPDU: physical layer protocol data unit

FIG. 12

Communication apparatus 1300

1302

1301

| Processing unit | — | Communication unit |

FIG. 13

Communication apparatus 1400

1401

1403

Processor

Transceiver

1404

1402

Memory

FIG. 14

## INTERNATIONAL SEARCH REPORT

International application No.

**PCT/CN2022/089065**

| A. | CLASSIFICATION OF SUBJECT MATTER |
|---|---|
| | H04W 72/04(2009.01)i |

According to International Patent Classification (IPC) or to both national classification and IPC

| B. | FIELDS SEARCHED |
|---|---|

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; VCN; ENTXT; VEN; IEEE; CNKI: 物理层协议数据单元, 物理协议数据单元, 聚合, 频带, 带宽, 载频, 频段, 载带, 载波, 子带, 指示, 资源, 分配, 调度, 配置, 索引, 资源单元, PPDU, MPDU, A-PPDU, A-MPDU, spectrum, subband, carrier, frequency, resource, allocation, configuration, index, RU, MRU

| C. | DOCUMENTS CONSIDERED TO BE RELEVANT | |
|---|---|---|
| Category* | Citation of document, with indication, where appropriate, of the relevant passages | Relevant to claim No. |
| A | CN 111970761 A (HUAWEI TECHNOLOGIES CO., LTD.) 20 November 2020 (2020-11-20) description, paragraphs [0007]-[0045] | 1-64 |
| A | CN 110768757 A (HUAWEI TECHNOLOGIES CO., LTD.) 07 February 2020 (2020-02-07) entire document | 1-64 |
| A | CN 111148243 A (HUAWEI TECHNOLOGIES CO., LTD.) 12 May 2020 (2020-05-12) entire document | 1-64 |
| A | WO 2021047519 A1 (HUAWEI TECHNOLOGIES CO., LTD.) 18 March 2021 (2021-03-18) entire document | 1-64 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 July 2022** | **18 July 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/089065**

| Patent document cited in search report | | | Publication date (day/month/year) | Patent family member(s) | | | Publication date (day/month/year) |
|---|---|---|---|---|---|---|---|
| CN | 111970761 | A | 20 November 2020 | None | | | |
| CN | 110768757 | A | 07 February 2020 | EP | 3820071 | A1 | 12 May 2021 |
| | | | | US | 2021143966 | A1 | 13 May 2021 |
| | | | | KR | 20210024205 | A | 04 March 2021 |
| | | | | WO | 2020019928 | A1 | 30 January 2020 |
| CN | 111148243 | A | 12 May 2020 | US | 2021258960 | A1 | 19 August 2021 |
| | | | | WO | 2020093890 | A1 | 14 May 2020 |
| WO | 2021047519 | A1 | 18 March 2021 | BR | 112022004253 | A2 | 31 May 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110513712